(19) Europäisches Patentamt
European Patent Office
Office européen des brevets

(11) EP 1 050 565 A2

(12) # EUROPÄISCHE PATENTANMELDUNG

(43) Veröffentlichungstag: **08.11.2000 Patentblatt 2000/45**

(21) Anmeldenummer: **00109177.6**

(22) Anmeldetag: **08.05.2000**

(51) Int. Cl.7: **C09G 1/04**, C09G 1/16, D06M 15/356, D06M 15/61, D06M 13/332, C14C 9/00

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.05.1999 DE 19920967**

(71) Anmelder:
**BASF AKTIENGESELLSCHAFT**
**67056 Ludwigshafen (DE)**

(72) Erfinder:
- **Stöckigt, Dieter D.I.**
  **67067 Ludwigshafen (DE)**
- **Lux, Jürgen, Dr.**
  **67693 Fischbach (DE)**
- **Borzyk, Oliver, Dr.**
  **67346 Speyer (DE)**
- **Mahr, Norbert Dr.**
  **67117 Limburgerhof (DE)**

(74) Vertreter:
**Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(54) **Verfahren zur Hydrophobierung und Zubereitungen zur Durchführung des Verfahrens**

(57) Beschrieben wird ein Verfahren zur Hydrophobierung von vorzugsweise harten Oberflächen unter Einsatz einer definierten Gruppe von siliciumfreien Polyaminoverbindungen mit mindestens zwei Stickstoffatomen, bei denen mindestens 50% der vorhandenen Stickstoffatome in der Hauptkette des Moleküls eingebunden oder unmittelbar an die Hauptkette gebunden sind, als Hydrophobierungswirkstoff. Die Erfindung betrifft ferner Zubereitungen dieser Wirkstoffe sowie Verfahren zur Hydrophobierung unter Einsatz besagter Wirkstoffe und Wirkstoffzubereitungen.



Printed by Xerox (UK) Business Services
2.16.7 (HRS)/3.6

## Beschreibung

Die vorliegende Erfindung betrifft die Verwendung einer definierten Gruppe von siliciumfreien Polyaminoverbindungen mit mindestens zwei Stickstoffatomen. bei denen mindestens 50% der vorhandenen Stickstoffatome in der Hauptkette des Moleküls eingebunden oder unmittelbar an die Hauptkette gebunden sind, als Hydrophobierungswirkstoff. Die Erfindung betrifft ferner Zubereitungen dieser Wirkstoffe sowie Verfahren zur Hydrophobierung unter Einsatz besagter Wirkstoffe und Wirkstoffzubereitungen.

In Autowaschanlagen werden zur Hydrophobierung von glatten (Lack-) Oberflächen dem Wasser des letzten Spülganges Hydrophobierungsmittel zugesetzt. Sie bewirken, daß der Wasserfilm auf der Lackoberfläche reißt und das Wasser leicht und möglichst vollständig abtropft. Auf diese Weise wird eine (Kalk-) Fleckenbildung beim Trocknen vermieden und der Energieaufwand für das zur Trocknung eingesetzte Gebläse minimiert. Übliche Autohydrophobierungsmittel enthalten kationische Tenside, meist quarternäre Ammoniumverbindungen und unter Umständen sogar Kohlenwasserstoffe.

Aus der DE-A-21 61 591 ist ein Verfahren bekannt zur Hydrophilierung von Glas- und Keramikoberflächen, bei dem eine Spülung der Oberflächen mit wässrigen Lösungen von polymeren Ethyleniminen oder polymerem Dimethylamino-(meth)acrylat oder deren Mischpolymeren mit nichtionogenen Monomeren, wie Acrylamid oder Acrylnitril, erfolgt. Durch die erzielte Hydrophilierung soll beispielsweise bei nassem Wetter eine Schlierenbildung auf Kraftfahrzeugscheiben zu vermeiden sein.

In der US-A-5,391,325 wird eine Emulsion beschrieben, die als Sprühwachs, Spülmittel oder Trocknungshilfsmittel bei der Autowäsche eingesetzt werden soll. Diese Emulsion enthält als Wirkstoff biologisch abbaubare Ester natürlicher Fettsäuren mit 12 bis 26 C-Atomen mit Alkanolen mit 1 bis 5 C-Atomen.

Aus der DE-A-39 30 028 sind Hydrophobierungsmittel bekannt, die in Waschanlagen für Nutzfahrzeuge dem letzten Spülwasser zugefügt werden und ein vollständiges Abtropfen und Abrollen des Wassers bewirken sollen. Als Wirkstoffe soll eine breite Palette von Estern mittel- bis langkettiger aliphatischer, aromatischer oder araliphatischer Mono- oder Dikarbonsäuren mit mittel- bis langkettigen aliphatischen, aromatischen oder araliphatischen Hydroxyverbindungen verwendbar sein.

Als kohlenwasserstofffreie Hydrophobierungsmittel, insbesondere für die Nachspülung in Autowaschanlagen, werden in der WO 92/21743 und der DE-A-34 27 726 Acetale der Formel R-CH(OR')OR'' genannt, worin die Reste R, R' und R'' Alkyl oder Alkenyl bedeuten und die Gesamtzahl der darin enthaltenen C-Atome ca. 18 bis 24 betragen soll.

Zur vom Verbraucher gewünschten dauerhaften Hydrophobierung der gereinigten (Lack-) Oberflächen sind diese Produkte und die damit hergestellten Formulierungen allerdings nicht geeignet. Deshalb ist es auch beschrieben worden, Wachsemulsionen oder aminofünktionelle Siloxane auf die gereinigten Oberflächen aufzubringen.

Die DE-A-34 39 440 betrifft ein Verfahren zur Hydrophobierung von Kraftfahrzeugen durch Behandlung mit einem aus einer wässrigen Lösung von Tensiden, Schaumbildnern und aminofunktionellen Polysiloxanen gebildeten Schaum. Als aminofunktionelle Polysiloxane werden Handelsprodukte eingesetzt.

Ein Verfahren zur Erzielung einer detergentienresistenten Schutzschicht auf harten Oberflächen ist aus der US-A-4,247,330 bekannt. Bei diesem Verfahren werden auf die zu schützenden Oberflächen wässrige Emulsionen aufgebracht, die als Wirkstoff eine Mischung eines aminofünktionellen Siloxanes mit einem cyclischen Siloxan enthalten. Ein gravierender Nachteil bei der Anwendung dieser Produkte ist, daß sie, insbesondere bei nicht ausreichend langer Reaktionszeit, wie die gefürchteten, schwer abbaubaren Kohlenwasserstoffe, in die Ölabscheider der Waschanlagen gelangen. Auch haften solche Produkte auf den Windschutzscheiben und führen zur Filmbildung und zum Verschmieren.

Aus der DE-A-43 23 638 ist es bekannt, bei technischen Reinigungsprozessen zumindest dem letzten Spülwasser Copolymere von 15 bis 90 Gew.-% stickstofffreien (Meth)-Acrylsäureestern, wie Ethylacrylat, Butylacrylat oder Methylmethacrylat, mit Aminogruppen tragenden (Meth)-Acrylsäureestern, wie Dimethylaminoethyl-methacrylat, zuzusetzen um die Bildung von Belägen, fleckigen Auftrocknungen und Schlieren auf den gereinigten Oberflächen zu verhindern. Die aus dieser Druckschrift bekannten Produkte eignen sich jedoch nicht zur dauerhaften Hydrophobierung der behandelten Oberflächen.

Es wurde nun gefunden daß man eine dauerhafte Hydrophobierung ohne die Verwendung von Mineralölen und Siliconölen erzielen und gleichzeitig die Bildung von Trockenflecken vermeiden kann, wenn man die zu hydrophobierenden Oberflächen mit einer wässrigen Lösung behandelt, die siliciumfreie Polyaminoverbindungen mit mindestens zwei Stickstoffatomen enthält, bei denen

a) mindestens 50% der vorhandenen Stickstoffatome in der Hauptkette des Moleküls eingebunden oder unmittelbar an die Hauptkette gebunden sind,
b) das Verhältnis der Anzahl aller Kohlenstoffatome zur Anzahl aller Stickstoffatome des Moleküls mindestens 1,8 beträgt,

c) mindestens 10 %, vorzugsweise mindestens 25 %, insbesondere mindestens 40 %, aller Kohlenstoffatome des Moleküls in Einheiten aus mindestens 3 direkt aneinander gebundenen Kohlenstoffatomen enthalten sind und/oder mindestens 7 %, vorzugsweise mindestens 25 %, insbesondere mindestens 50 %, aller in die Hauptkette eingebundenen Stickstoffatome in Form tertiärer Aminogruppen vorliegen,

d) und die im Molekül keine von Lysin, Arginin, Ornithin oder Trypbophan abgeleiteten Baugruppen aufweisen.

Ein Gegenstand der vorliegenden Erfindung ist somit die Verwendung dieser siliconfreien Polyaminoverbindungen als Hydrophobierungswirkstoff.

Als Hauptkette gilt in dieser Definition die längste, nur aus gegebenenfalls Substituenten -R,-R' tragenden Methylen-(-CRR'-) und Iminogruppen (-NR-) bestehende Kette des definierten Moleküls. Tertiäre Aminogruppen sind solche, die kein Wasserstoffatom enthalten.

Die Verbindungen des oben definierten Typs zeigen eine besonders ausgewogene Kombination von Netzvermögen, Hydrophobierungsvermögen, Löslichkeit bzw. Dispergierbarkeit und Verträglichkeit mit anderen in Hydrophobierungszubereitungen üblicherweise enthaltenen Hilfsstoffen.

Eine spezielle Gruppe von erfindungsgemäß einzusetzenden Polyaminoverbindungen sind Polyvinylamine der Formel I,

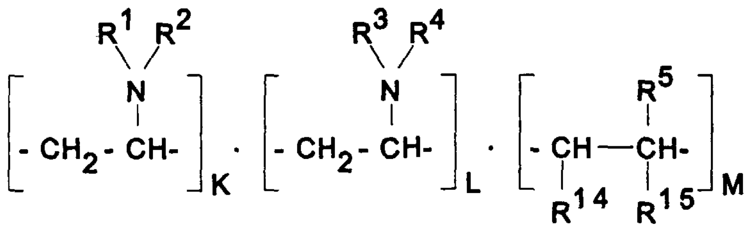

(I)

worin der Quotient K+L/(K+L+M) einen Betrag von 0,1 bis 1
und der Quotient M/(K+L+M) einen Betrag von 0 bis 0,9 hat, wobei die Vinylamin-Baugruppen und die Comonomer-Baugruppen in der Polymerkette in statistischer Verteilung oder in Form von Blöcken vorliegen können,
$R^1$ und $R^2$ gleich oder verschieden sind und Wasserstoff, lineares oder verzweigtes Alkyl mit 1 bis 20 C-Atomen, lineares oder verzweigtes Hydroxyalkyl mit 2 bis 10 C-Atomen, Cycloalkyl mit 4 bis 8 C-Atomen oder Polyetherketten der Formel $(-CHR^6-CHR^7-O-)_mH$ bedeuten,
worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann, und $R^3$ Wasserstoff oder lineares oder verzweigtes Alkyl mit 1 bis 20 C-Atomen oder Cycloalkyl mit 4 bis 8 C-Atomen und $R^4$ Alkanoyl mit linearer oder - sofern die Kette mehr als 2 C-Atome aufweist - verzweigter Alkylkette mit 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen oder Alkyloxycarbonyl mit 1 bis 20 C-Atomen bedeuten oder $R^3$ und $R^4$ gemeinsam einen zweiwertigen, linearen gesättigten oder ungesättigten Rest mit 4 oder 5 C-Atomen, oder 3 oder 4 C-Atomen und einem Heteroatom, bilden, der mit dem N-Atom, an das er gebunden ist, einen 5- oder 6-gliedrigen heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann,
und die Aminogruppen $-NR^1R^2$ und - soweit weder $R^3$ noch $R^4$ eine dem Stickstoffatom benachbarte Carbonylfunktion aufweisen, auch $-NR^3R^4$ - auch zu

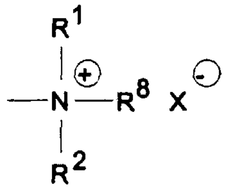 bzw. 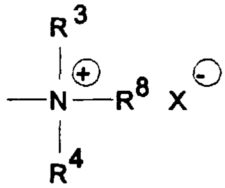

quaternisiert sein können, wobei $R^8$ Alkyl mit 1 bis 10 C-Atomen oder Phenalkyl mit 7 bis 10 C-Atomen, vorzugsweise Alkyl mit 1 bis 5 C-Atomen oder Benzyl, und $X^-$ ein Anion, vorzugsweise ein Halogenidanion oder ein Methosulfatanion, ist,

und $R^5$ für -H, -Cl, -CN, Phenyl, Hydroxy, Acyloxy mit 1 bis 20 C-Atomen im Acylrest, gegebenenfalls substituiertes Amidocarbonyl, wie Alkyl- und Dialkylamidocarbonyl mit 1 bis 6, vorzugsweise 1 bis 4, C-Atomen, oder eine Aminoalkylamidocarbonyl-Gruppe der Formel $-CO-NH-D-NA^1A^2$, worin der Alkylenrest D 1 bis 6, vorzugsweise 1 bis 4, C-Atome hat und $A^1$ und $A^2$ gleich oder verschieden sind und Wasserstoff oder Alkylreste mit je 1 bis 4 C-Atomen bedeuten, gegebenenfalls substituiertes Alkoxycarbonyl mit geradkettigem oder verzweigtem Alkylrest mit 1 bis 8 C-Atomen, Hydroxyalkoxycarbonyl mit bis zu 6 C-Atomen im Hydroxyalkylrest, eine Gruppe der Formel -CO-O-[POA], worin [POA] für einen einseitig veresterten Di- oder Triglykolrest oder eine Polyoxyalkylenkette mit einer Molmasse von bis zu 10000 steht, eine gegebenenfalls N-mono- oder N,N'-di-alkysubstituierte Aminoalkyloxycarbonyl-Gruppe der Formel $-CO-O-D-NA^1A^2$ , worin der Alkylenrest -D- 1 bis 6, vorzugsweise 1 bis 4, C-Atome hat und $A^1$ und $A^2$ gleich oder verschieden sind und Wasserstoff oder Alkylreste mit je 1 bis 4 C-Atome bedeuten, und $R^{14}$ und $R^{15}$ gleich oder verschieden sind und Wasserstoff oder Alkyl mit 1 bis 6 C-Atomen bedeuten, wobei $R^{14}$ und $R^{15}$ zusammen vorzugsweise 0 bis 6 C-Atome haben, steht.

Bevorzugt sind Polyvinylamine der Formel I bei denen der Quotient $K+L/(K+L+M)$ einen Betrag von 0,85 bis 1 und der Quotient $M/(K+L+M)$ einen Betrag von 0 bis 0,15 hat und insbesondere solche, bei denen der Quotient $K+L/(K+L+M)$ einen Betrag von 1 und der Quotient $M/(K+L+M)$ einen Betrag von 0 hat.
Weiterhin sind Polyvinylamine der Formel I bevorzugt, bei denen das Verhältnis L:K im Bereich von 0 bis 10, vorzugsweise 0 bis 2, liegt und solche, bei denen die Summe von $K+L+M$ einen Wert von 5 bis 1000, insbesondere von 5 bis 50, hat, sowie solche, bei denen K eine Zahl größer als 10 ist.

Die Mol-Anteile K, L und M sind Mittelwerte aus den Einzelwerten aller Moleküle, die sich in einer Probe einer untersuchten erfindungsgemäßen Substanz befinden. Die aus diesen Anteilswerten berechneten Quotienten und Verhältnisangaben sind dementsprechend ebenfalls Mittelwerte, die sich auf die Gesamtheit der untersuchten Probe beziehen.

Alkylgruppen, die für $R^1$ und $R^2$ stehen, haben vorzugsweise 1 bis 10, insbesondere 1 bis 4, C-Atome. Besonders bevorzugte Bedeutungen für $R^1$ und $R^2$ sind Wasserstoff, Methyl, Ethyl, Hydroxyethyl, Hydroxypropyl, Hydroxyisopropyl und Hydroxyisobutyl.
Die Reste $R^6$ und $R^7$ der Polyetherketten weisen vorzugsweise gemeinsam 1 bis 10, insbesondere 1 bis 4, C-Atome auf. Weiterhin sind solche Polyetherketten bevorzugt, bei denen mindestens einer der Reste $R^6$ und $R^7$ Wasserstoff bedeutet und weiterhin solche, in denen $R^6$ und/oder $R^7$ Methyl oder Ethyl bedeuten.
Von besonderem anwendungtechnischen und ökonomischen Interesse sind Verbindungen mit Polyetherketten, in denen einer der Reste $R^6$ oder $R^7$ Wasserstoff und der andere Wasserstoff, Methyl oder Ethyl ist.
Alkylgruppen, die für $R^3$ stehen, haben vorzugsweise 1 bis 10, insbesondere 1 bis 4 C-Atome. Besonders bevorzugte Bedeutungen für $R^3$ sind Wasserstoff. Methyl und Ethyl.

Alkylgruppen, die in den für $R^4$ stehenden Resten Alkanoyl, Mono- oder Dialkylaminocarbonyl, oder Alkyloxycarbonyl enthalten sind, haben vorzugsweise insgesamt 1 bis 10, insbesondere 1 bis 6 C-Atome. Besonders bevorzugt für $R^4$ ist die Formylgruppe.
Niederalkylgruppen, auch solche die Bestandteil von Niederalkoxy-, Niederalkoxycarbonyl- oder Niederalkanoyloxy-Gruppen sind, weisen 1 bis 6, vorzugsweise 1 bis 3, C-Atome auf.
Eine besonders bevorzugte Bedeutung von $R^8$ ist Methyl und Ethyl.
Eine besonders vorteilhafte Anpassung der hydrophilen und hydrophoben Molekülbereiche der erfindungsgemäß einzusetzenden Polyvinylamine ergibt sich, wenn im statistischen Mittel 50 bis 100 %, vorzugsweise 85 bis 100 %, der Reste $R^1$ und $R^2$ für Polyetherketten, und 0 bis 50 %, vorzugsweise 0 bis 15 %, der Reste $R^1$ und $R^2$ für Wasserstoff oder Alkyl stehen.

Sofern in erfindungsgemäß eingesetzten Polyvinylaminen Gruppen der Formel $(-CHR^6-CHR^7-O-)_mH$, enthalten sind, bei denen m größer als 1 ist, steht $R^1$ und $R^2$ vorzugsweise nicht für Wasserstoff. Demgemäß ist es auch

bevorzugt, daß im statistischen Mittel 85 bis 100 % der Reste $R^1$ und $R^2$ für Polyetherketten und 0 bis 15 % der Reste $R^1$ und $R^2$ für Alkyl stehen.
Sofern in den erfindungsgemäß einzusetzenden Verbindungen der Formel I L ungleich 0 ist, können 0 bis 80%, vorzugsweise 0 bis 40% der Reste $R^3$ und $R^4$ gemeinsam mit dem N-Atom, an das sie gebunden sind, einen 5- oder 6-gliedrigen heterocyclischen gesättigten oder ungesättigten Ring bilden. Dabei ist in der Regel das Heteroatom eines solchen, für $R^3$ und $R^4$ gemeinsam stehenden zweiwertigen Restes ein N-, O- oder S-Atom.
Beispielweise können $R^3$ und $R^4$ gemeinsam mit dem Stickstoffatom, an das sie gebunden sind, einen gegebenenfalls noch mit einer Alkylgruppe mit 1 bis 4 C-Atomen substituierten Pyrrol-, Pyrrolin-, Pyrrolidin-, Pyrazol-, Pyrazolin-, Pyrazolidin-, Pyrazolon-, Imidazol-, Imidazolin-, Imidazolidin-, Dihydro-oxazol-, Oxazolidin-, Dihydro-thiazol-, Thiazolidin-, Piperidin-, Pyridon-, Dihydro- oder Tetrahydro-Pyridazin-, Dihydro-pyrimidin-, Piperimidin-, Piperazin-, Di- oder Tetrahydro-Oxazin- oder einen Dihydro- oder Tetrahydro-Thiazin-Ring bilden. Eine für $R^5$ stehende Acyloxygruppe ist ein Phenylcarbonylrest, ein Phenalkylcarbonylrest, vorzugsweise aber ein Alkylcarbonylrest mit einem linearen oder verzweigten Alkylrest, insbesondere mit 1 bis 4 C-Atomen.
Besonders bevorzugt als für $R^5$ stehende Acyloxygruppe ist der Acetoxyrest.
Weitere, besonders bevorzugte Bedeutungen für die in den Polymeren der Formel I enthaltenen Substituenten ergeben sich aus den weiter unten angegebenen Beispielen für Monomeren, die zur Herstellung der Polymeren geeignet sind.

Eine weitere Gruppe erfindungsgemäß einzusetzender Polyaminoverbindungen entspricht der Formel II

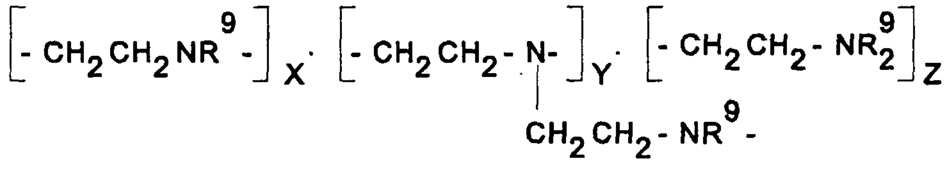

(II)

worin X, Y und Z ganze Zahlen sind, deren Summe X+Y+Z im Bereich von 10 bis 1000, vorzugsweise von 15 bis 150, insbesondere von 25 bis 125, liegt,
wobei die Verteilung der Comonomer-Baugruppen vorzugsweise statistisch ist, gewünschtenfalls aber auch blockförmig sein kann,
0 bis 90 % der Reste $R^9$ Wasserstoff,
10 bis 100 % der Reste $R^9$ lineares oder verzweigtes Alkyl mit 1 bis 20 C-Atomen, Cycloalkyl mit 4 bis 8 C-Atomen oder Polyetherketten der Formel $(-CHR^6-CHR^7-O-)_mH$ bedeuten,
worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann,
und 0 bis 90 % der Reste $R^9$ Alkanoyl mit linearer oder - sofern die Kette mehr als 2 C-Atome aufweist - verzweigter Alkylkette mit 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen, Alkyloxycarbonyl mit 1 bis 20 C-Atomen bedeuten,
oder, sofern zwei Reste $R^9$ an ein und dasselbe Stickstoffatom gebunden sind, beide gemeinsam einen zweiwertigen, linearen gesättigten oder ungesättigten Rest mit 4 oder 5 C-Atomen, oder 3 oder 4 C-Atomen und einem Heteroatom, bilden, der mit dem N-Atom, an das er gebunden ist, einen 5- oder 6-gliedrigen heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann,
die Stickstoffatome - soweit sie keine Substituenten $R^9$ tragen, die eine dem Stickstoffatom benachbarte Carbonylfunktion aufweisen - auch zu

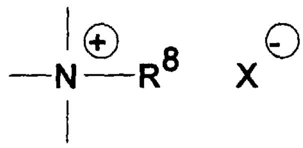

quaternisiert sein können, wobei $R^8$ Alkyl mit 1 bis 10 C-atomen oder Phenalkyl mit 7 bis 10 C-Atomen, vorzugsweise Alkyl mit 1 bis 5 C-Atomen oder Benzyl und $X^-$ ein Anion, vorzugsweise ein Halogenidanion oder ein Methosulfatanion ist.

Bevorzugt sind dabei solche Polyaminoverbindungen der Formel II, bei denen die Zahlenwerte von Z:X:Y im Verhältnis von etwa 30:40:30 stehen, sowie solche, bei denen mindestens 10%, vorzugsweise mindestens 25 %, insbesondere mindestens 40 %, aller in dem Molekül enthaltenen C-Atome in Einheiten aus mindestens 3 direkt aneinander gebundenen C-Atomen enthalten sind.
Weiterhin ist es im Interesse der Einstellbarkeit von hydrophilen und hydrophoben Bereichen der Polyamine vorteilhaft, wenn im statistischen Mittel 50 bis 100 % der Reste $R^9$ für Polyetherketten, 0 bis 50 % der Reste $R^9$ für Wasserstoff stehen.

Gut geeignet für den erfindungsgemäßen Einsatz sind auch Polyaminoverbindungen der Formel III

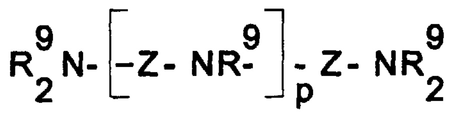

(III)

worin p für 0 bis 20, vorzugsweise für 1 bis 6, insbesondere für 1 bis 3, steht, und das zweiwertige Bauelement -Z- die Struktur der Formel IV

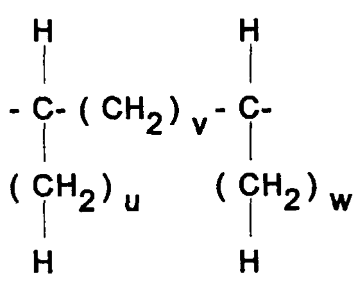

(IV)

hat, worin die Buchstaben u, v und w Zahlen von 0 bis 10, vorzugsweise von 1 bis 4 bedeuten und die Summe u+v+w 1 bis 10, vorzugsweise 1 bis 6 beträgt, wobei die Werte u, v und w in den einzelnen Kettengliedern gleich oder verschieden sein können, wobei die Verteilung der Baugruppen [-Z-$NR^9$-] vorzugsweise statistisch ist,
0 bis 90 % der Reste $R^9$ Wasserstoff,
10 bis 100 % der Reste $R^9$ lineares oder verzweigtes Alkyl mit 1 bis 20 C-Atomen, Cycloalkyl mit 4 bis 8 C-Atomen

oder Polyetherketten der Formel $(-CHR^6-CHR^7-O-)_mH$ bedeuten,

worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann, und 0 bis 90 % der Reste $R^9$ Alkanoyl mit linearer oder - sofern die Kette mehr als 2 C-Atome aufweist - verzweigter Alkylkette mit 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen, Alkyloxycarbonyl mit 1 bis 20 C-Atomen bedeuten,

oder, sofern zwei Reste $R^9$ an ein und dasselbe Stickstoffatom gebunden sind, beide gemeinsam einen zweiwertigen, linearen gesättigten oder ungesättigten Rest mit 4 oder 5 C-Atomen, oder 3 oder 4 C-Atomen und einem Heteroatom, bilden, der mit dem N-Atom, an das er gebunden ist, einen 5- oder 6-gliedrigen heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann,

die Stickstoffatome - soweit sie keine Substituenten $R^9$ tragen, die eine dem Stickstoffatom benachbarte Carbonylfunktion aufweisen - auch zu

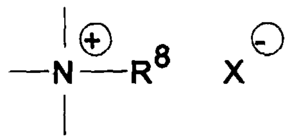

quaternisiert sein können, wobei $R^8$ Alkyl mit 1 bis 10 C-atomen oder Phenalkyl mit 7 bis 10 C-Atomen, vorzugsweise Alkyl mit 1 bis 5 C-Atomen oder Benzyl, und $X^-$ ein Anion, vorzugsweise ein Halogenidanion oder ein Methosulfatanion, ist.

Bevorzugt sind dabei solche Polyaminoverbindungen der Formel III, bei denen mindestens 10%, vorzugsweise mindestens 25 %, insbesondere mindestens 40 %, aller in dem Molekül enthaltenen C-Atome in Einheiten aus mindestens 3 direkt aneinander gebundenen C-Atomen enthalten sind.
Auch in diesem Fall ist es zweckmäßig, wenn im statistischen Mittel 50 bis 100 % der Reste $R^9$ für Polyetherketten und 0 bis 50 % der Reste $R^9$ für Wasserstoff stehen.

Weiterhin eignen sich für den erfindungsgemäßen Einsatz N,N'-Bis(aminoalkyl)-piperazin-derivate der Formel V

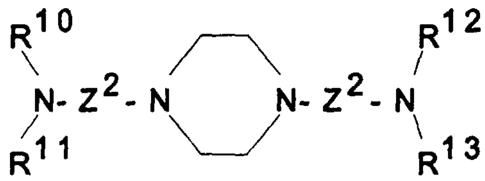

(V)

worin die zweiwertigen Bauelemente $-Z^2-$ für gleiche oder verschiedene Gruppen der Formel IV

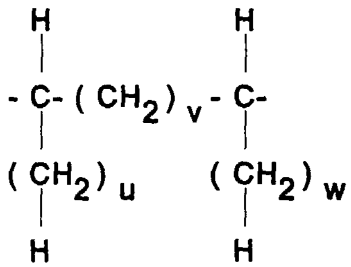

(IV)

stehen, worin die Buchstaben u, v und w Zahlen von 0 bis 10, vorzugsweise von 1 bis 4 bedeuten und die Summe u+v+w 1 bis 10, vorzugsweise 1 bis 6 beträgt, 0 bis 90 % der Reste $R^{10}$ bis $R^{13}$ Wasserstoff,
10 bis 100 % der Reste $R^{10}$ bis $R^{13}$ lineares oder verzweigtes Alkyl mit 1 bis 20 C-Atomen, Cycloalkyl mit 4 bis 8 C-Atomen oder Polyetherketten der Formel $(-CHR^6-CHR^7-O-)_mH$ bedeuten,
worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann, oder $R^{11}$ und $R^{13}$ Alkanoyl mit linearer oder - sofern die Kette mehr als 2 C-Atome aufweist - verzweigter Alkylkette mit 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen, oder Alkyloxycarbonyl mit 1 bis 20 C-Atomen bedeuten oder $R^{10}$ mit $R^{11}$ oder $R^{12}$ mit $R^{13}$ gemeinsam einen zweiwertigen, linearen gesättigten oder ungesättigten Rest mit 4 oder 5 C-Atomen oder 3 oder 4 C-Atomen und einem Heteroatom bilden, der mit dem N-Atom, an das er gebunden ist, einen 5- oder 6-gliedrigen heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann,
die Aminogruppen $-NR^{10}R^{11}$ und $-NR^{12}R^{13}$, sofern $R^{11}$ bzw. $R^{13}$ keine dem Stickstoffatom benachbarte Carbonylfunktion aufweisen, zu

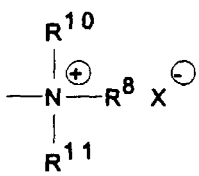

bzw.

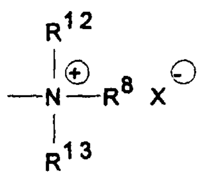

quaternisiert sein kann, wobei $R^8$ Alkyl mit 1 bis 10 C-Atomen oder Phenalkyl mit 7 bis 10 C-Atomen, vorzugsweise Alkyl mit 1 bis 5 C-Atomen oder Benzyl, und $X^-$ ein Anion, vorzugsweise ein Halogenidanion oder ein Methosulfatanion, ist.

Bevorzugt sind Verbindungen der Formel V bei denen 50 bis 90 % der Reste $R^{10}$ bis $R^{13}$ Wasserstoff oder 50 bis 100 % der Reste $R^{10}$ bis $R^{13}$ Alkyl mit 1 bis 20 C-Atomen oder Polyetherketten der Formel $(-CHR^{6-}CHR^7-O-)_mH$ sind, worin $R^6$ und $R^7$ die oben genannten Bedeutungen haben,

und 0 bis 90 % der Reste $R^{10}$ bis $R^{13}$ Wasserstoff oder Alkyl mit 1 bis 20 C-Atomen, Alkanoyl mit 1 bis 20 C-Atomen, Aroyl mit 6 bis 12 C-Atomen, Mono- oder Dialkylaminocarbonyl mit insgesamt 1 bis 20 C-Atomen, Alkyloxycarbonyl mit 1 bis 20 C-Atomen bedeuten
oder 0 bis 50 % der Reste $R^{10}$ und $R^{11}$ bzw. $R^{12}$ und $R^{13}$ gemeinsam einen zweiwertigen, linearen gesättigten oder ungesättigten Rest mit 4 oder 5 C-Atomen oder 3 oder 4 C-Atomen und einem Heteroatom bilden, der mit dem N-Atom, an das er gebunden ist, einen 5- oder 6-gliedrigen heterocyclischen gesättigten oder ungesättigten Ring bildet, der wie oben angegeben substituiert sein kann.

Bevorzugt sind auch solche Polyamine der Formel V, bei denen mindestens 10%, vorzugsweise mindestens 25 %, insbesondere mindestens 40 %, aller in dem Molekül enthaltenen C-Atome in Einheiten aus mindestens 3 direkt aneinander gebundenen C-Atomen enthalten sind.

Die Bedeutungen von $R^1$ bis $R^9$ können längs der Kette der erfindungsgemäß einzusetzenden Polyamine der Formeln I, II und III innerhalb der angegebenen Definitionsgrenzen variieren.

Ein bevorzugter Gegenstand der Erfindung ist sowohl die Verwendung von einzelnen Verbindungen der Formeln I, II, III, oder V als auch die Verwendung von Mischungen von mehreren Spezies der einzelnen Gruppen und/oder von Kombinationen von Vertretern mehrerer der genannten Gruppen als Hydrophobierungswirkstoff.

Die erfindungsgemäß einzusetzenden Polyaminoverbindungen werden in Form sehr verdünnter wässriger Lösungen auf die zu hydrophobierenden Flächen aufgebracht. Die Konzentration des Wirkstoffs in diesen Lösungen liegt in der Regel im Bereich von 0,01 bis 2 Gew.-%, vorzugsweise 0,02 bis 0,8 Gew.-%, insbesondere 0,05 bis 0,5 Gew.-%. Sie entfalten ihre Wirkung auf der behandelten Oberfläche nach sehr kurzer Reaktionszeit mit dem Effekt, daß bereits kurz nach dem Aufbringen der Behandlungslösung der Wasserfilm aufreißt und von der behandelten Oberfläche abperlt.

Grundsätzlich ist es möglich, die Wirkstoffe, falls erforderlich in Form ihrer Salze, z.B. ihrer Hydrochloride oder Acetate, durch Einrühren in Wasser, erforderlichenfalls unter Erwärmung aufzulösen, um wäßrige Lösungen zur Hydrophobierungsbehandlung zu erhalten. Vorteilhaft ist es jedoch, die erfindungsgemäß einzusetzenden Wirkstoffe mit anderen Hilfs- und Zusatzstoffen zu kombinieren, wie es auch bei anderen bisher bekannten Wirkstoffen praktiziert wird. Zweckmäßigerweise werden hierzu aus den gewünschten Hilfs- und Zusatzstoffen und den erfindungsgemäß einzusetzenden Wirkstoffen Zubereitungen hergestellt, die leicht in der erforderlichen Konzentration in die wäßrigen Behandlungsflotten eingebracht werden können, d.h. die sich ohne umstandliche Mischoperationen darin gleichmäßig und rückstandslos verteilen lassen.

Ein weiterer großer Vorteil der erfindungsgemäß einzusetzenden Wirkstoffe besteht dabei darin, daß sie die Wirkung der anderen, in den Zubereitungen vorhandenen Hilfsstoffe nicht beeinträchtigen. Insbesondere beeinträchtigen sie nicht die Wirkung von üblichen Netzmitteln, so daß es möglich ist, Behandlungslösungen und Bäder bereitzustellen, die die zu behandelnden Oberflächen schnell und vollständig benetzen. Auch die Wirkung von Emulgatoren wird nicht beeinträchtigt. Sie lassen sich daher einwandfrei in konzentrierte, langzeitbeständige und kältebeständige Zubereitungen einarbeiten.

Ein weiterer Gegenstand der vorliegenden Erfindung sind daher Hydrophobierungszubereitungen, die sich sehr einfach in die wäßrigen Behandlungsflotten einbringen lassen, umfassend Hydrophobierungswirkstoffe, Netzmittel, Emulgatoren, bei bevorzugten Zubereitungen auch wassermischbare Lösungsmittel, und organische Karbonsäuren, und gegebenenfalls weitere Hilfs- und/oder Zusatzstoffe (wie Schaumbildner und Glanzmittel), die dadurch gekennzeichnet sind, daß sie als Hydrophobierungswirkstoff Polyaminoverbindungen mit mindestens zwei Stickstoffatomen enthalten, bei denen

a) mindestens 50% der vorhandenen Stickstoffatome in der Hauptkette des Moleküls eingebunden oder unmittelbar an die Hauptkette gebunden sind,

b) das Verhältnis der Anzahl aller Kohlenstoffatome zur Anzahl aller Stickstoffatome des Moleküls mindestens 1,8 beträgt,

c) mindestens 10 %, vorzugsweise mindestens 25 %, insbesondere mindestens 40 %, aller Kohlenstoffatome des Moleküls in Einheiten aus mindestens 3 direkt aneinander gebundenen Kohlenstoffatomen enthalten sind und/oder mindestens 7 %, vorzugsweise mindestens 25 %, insbesondere mindestens 50 %, aller in die Hauptkette eingebundenen Stickstoffatome in Form tertiärer Aminogruppen vorliegen,

d) und die im Molekül keine von Lysin, Arginin, Ornithin oder Tryptophan abgeleiteten Baugruppen aufweisen.

Bevorzugte erfindungsgemäße Hydrophobierungszubereitungen enthalten als Hydrophobierungswirkstoff eine oder mehrere Verbindungen der Formeln I, II, III und/oder V.

Günstige synergistische Effekte lassen sich auch mit Kombinationen der erfindungsgemäß einzusetzenden Wirkstoffe untereinander erzielen.

Auch Kombinationen der erfindungsgemäß einzusetzenden Wirkstoffe mit bereits bekannten hydrophobierend wirkenden Substanzen, wie siliconfreien oder siliconhaltigen Ölen oder emulgierten Wachsen können für bestimmte Aufgaben besonders günstige Eigenschaftsprofile aufweisen.

Die erfindungsgemäßen Hydrophobierungszubereitungen enthalten die Hydrophobierungswirkstoffe zweckmäßigerweise in einem Anteil von 5 bis 50 Gew.-%, vorzugsweise von 10 bis 40 Gew.-%, insbesondere von 10 bis 30 Gew.-%. Zubereitungen (in der Technik auch als Formulierungen oder Hydrophobierungsmittel bezeichnet) von Kombinationen erfindungsgemäß einzusetzenden und bekannten Wirkstoffe, wie sie in der Praxis zweckmäßigerweis

eingesetzt werden, können beispielsweise folgende Zusammensetzung aufweisen:

5-50, vorzugsweise 10-40, insbesondere 10-30 Gew.-% eines der erfindungsgemäß einzusetzenden Polyamine,
0-15, vorzugsweise 10-15, insbesondere 2 - 5 Gew.-% hydrophobe, siliconfreie Öle,
0-10, vorzugsweise 0,5 - 7,5, insbesondere 1 - 7 Gew.-% Siliconöle,
0-15, vorzugsweise 0,5 - 10, insbesondere 2 - 8 Gew.-% emulgierte Wachse,
0-20, vorzugsweise 2 - 12, insbesondere 2,5 - 10 Gew.-% Netzmittel und Emulgatoren,
0,1-10, vorzugsweise 0,3 - 5, insbesondere 0,5 - 3 Gew.-% Säuerungsmittel,
0,1-25, vorzugsweise 1 - 20, insbesondere 2,5 - 15 Gew.-% Solubilisatoren,
0-5 Gew.-% weitere modifizierende Zusätze wie Parfüms, Farbstoffe, Schaumbildner oder Glanzmittel sowie Wasser auf 100 Gew.-%.

Sofern bestimmte, von bekannten Hydrophobierwirkstoffen ausgehende Nebeneffekte, wie z.B. Schlierenbildung auf Glasflächen vermieden werden sollen, hat es sich als vorteilhaft erwiesen, beispielsweise erfindungsgemäße Hydrophobierungszubereitungen folgender Zusammensetzung zu verwenden:

5 bis 50 Gew.-%, vorzugsweise 10 bis 40 Gew.-%, Hydrophobierungswirkstoff
0,5 bis 10 Gew.-% Netzmittel
0,5 bis 20 Gew.-% Emulgatoren
0,05 bis 10 Gew.-% wassermischbare Lösungsmittel (Solubilisatoren)
0,01 bis 10 Gew.-% organische Karbonsäuren
0 bis 5 Gew.-% weitere Hilfs- und Zusatzstoffe Rest Wasser.

Insbesondere enthalten solche erfindungsgemäßen Hydrophobierungszubereitungen

10 bis 30 Gew.-% Hydrophobierungswirkstoff
0,5 bis 5 Gew.-% Netzmittel
0,5 bis 10 Gew.-% Emulgatoren
0,5 bis 5 Gew.-% wassermischbare Lösungsmittel (Solubilisatoren)
0,1 bis 5 Gew.-% organische Karbonsäuren
0 bis 5 Gew.-% weitere Hilfs- und Zusatzstoffe
Rest Wasser.

In der Regel erfolgt die erfindungsgemäß auszuführende Hydrophobierungsbehandlung in Form einer Endspülung im Anschluß an eine Reinigung der zu behandelnden Oberfläche.
Im Folgenden werden Beispiele für die in den erfindungsgemäßen Zubereitungen neben den Hydrophobierungswirkstoffen enthaltenen Substanzen und ihre Funktionen gegeben:
Als siliconfreie Öle kommen z.B. gesättigte oder ungesättigte $C_{12}$ - $C_{25}$ Kohlenwasserstoffe, $C_6$ - $C_{20}$ Alkylbenzole, $C_{12}$ - $C_{25}$ Alkohole, Ester von $C_{12}$ - $C_{25}$ Alkoholen mit $C_2$ - $C_8$ Carbonsäuren oder Ester von $C_1$ - $C_8$ Alkoholen mit $C_8$ - $C_{25}$ Carbonsäuren in Betracht. Beispiele dafür sind Paraffinöle, Citrusterpene, Pineöl, Fettalkohole, Methylester von Fettsäuren und Essigsäureester von Fettalkoholen.
Als emulgierte Wachse kommen wäßrige Emulsionen natürlicher oder synthetischer Wachse in Frage. Insbesondere geeignet sind emulgierte $C_2$ - $C_4$ Alkylencopolymerisate mit ungesättigten Carbonsäuren wie beispielsweise Ethylen/Acrylsäure-Wachse.
Netzmittel dienen dazu, eine gleichmäßige Verteilung der Endspülung über die zu hydrophobierende Fläche zu erreichen. Besonders geeignet sind Niotenside, Ethoxylierungsprodukte von Fettalkohol- oder Fettamin-Gemischen mit 10 bis 18 C-Atomen mit 5 bis 20, vorzugsweise 8 bis 15 Mol Ethylenoxid. Besonders bevorzugt sind Additionsprodukte von im Mittel ca. 12 Ethylenoxid-Einheiten an Fettamine bestehend im wesentlichen aus $C_{12}$- bis $C_{14}$-Komponenten (Kokosfettamin). Weitere für für den erfindungsgemäßen Einsatz geeignete Netzmittel sind beispielsweise Tetraalkylammoniumverbindungen mit mindestens einem langkettigen ($C_8$ bis $C_{25}$) und, vorzugsweise, mindestens einem kurzkettigen ($C_1$ bis $C_4$) Alkylrest, sowie 1-(Hydroxy- oder aminoniederalky)-2-höheralkyl-imidazoline, worin die Niederalkylgruppen 2 bis 4 C-Atome und die Höheralkylgruppen 10 bis 25 C-Atome aufweisen, $C_8$-$C_{22}$ - Alkylesterquats, $C_8$-$C_{25}$ - alkylsubstituierte Amine und Oligamine mit 2 - 4 Aminogruppen.
Emulgatoren dienen dazu, die erfindungsgemäß eingesetzten polymeren Hydrophobierungswirkstoffe der Formeln I bis V in den erfindungsgemäßen Hydrophobierungszubereitungen gleichmäßig zu verteilen und die erhaltenen Emulsionen und Dispersionen über lange Zeit und auch bei niedrigen und höheren Temperaturen zu stabilisieren. Für diesen Zweck eignen sich insbesondere Salze, insbesondere Formiate oder Acetate von Ethoxylierungsprodukten von Fettalkohol- oder Fettamin-Gemischen mit 10 bis 18 C-Atomen mit durchschnittlich 2 bis 5, vorzugsweise 2 bis 3

Mol Ethylenoxid, ferner aromatische Alkoxylate z.B. alkoxyliertes p-Nonylphenol mit 2-4 Ethylenoxideinheiten.

Als Netzmitel und Emulgatoren sind ferner zum Beispiel alkoxylierte $C_{10}$ - $C_{25}$ Fett- oder Oxoalkohole geeignet, die durch Umsetzung der Alkohole mit 1 bis 5 Mol Ethylenoxyd und/oder 1 bis 10 Mol Propylenoxid und/oder 1 bis 5 Mol Butylenoxid erhalten werden. Ebenfalls geeignet sind Blockpolymerisate von Propylenoxid und/oder Butylenoxid und Ethylenoxid mit einem Anteil an Ethylenoxideinheiten von unter 30 Gew.-%.

Wassermischbare Lösungsmittel, dienen als Lösungsvermittler, gelegentlich auch "Kupplungsmittel" oder "Solubilisatoren" genannt. Sie dienen zur Stabilisierung der Hydrophobierungszubereitungen und fragen dazu bei, Ausfällungen beim Verdünnen der Zubereitungen mit Wasser auf die Anwendungskonzentration zu verhüten. Damit unterstützen sie die Wirkung der Emulgatoren. Weiterhin dienen sie der Viskositätseinstellung der Zubereitungen. Geeignete Solubilisatoren sind z.B. wasserlösliche Glykole, Polyglykole, Monoalkylglykole, Monoalkylpolyglykole, Dialkylglykole oder Dialkylpolyglykole, wobei die Polyglykote 2 bis 10 Ethylenoxid-, Propylenoxid- und/oder Butylenoxideinheiten in statistischer Verteilung oder in blockweiser Verteilung enthalten können und die Alkylgruppen 1 bis 6 C-Atome aufweisen. Weitere Beispiele für derartige Lösungsvermittler sind niedermolekulare Alkanole oder Alkandiole, vorzugsweise mit 1 bis 6 C-Atomen, deren Niederalkylcarbonsäureester oder Glycolmonoether wie Ethanol, Propanol, Isopropanol, Isobutanol, Glykol, Diglycol, Monobutylglycol oder Monobutyl-diglykol, Propylenglycol-monobutylether, n- oder iso-Butylacetat.

Vorzugsweise werden Mono-$C_1$ bis $C_4$-alkylglykole eingesetzt, insbesondere Monobutylglykol.

Organische Karbonsäuren, die sich für den Zusatz zu Hydrophobierungszubereitungen mit Wirkstoffen der Formeln I bis V eignen, sind Ameisensäure, Essigsäure, Propionsäure, Oxalsäure und solche, die in Alphastellung elektronenanziehende Substituenten fragen, wie z.B. Milchsäure, Apfelsäure, Zitronensäure, Monochloressigsäure.

Besonders geeignet sind sind die $C_1$ - $C_3$ Carbonsäuren, insbesondere Ameisen- oder Essigsäure.

Weitere Hilfs- und Zusatzstoffe sind zum Beispiel Schaumbildner, wie Seife oder Saponine, oder Glanzmittel, wie Siliconöl, Phthalsäure-di-(C4-C12)-alkylester, beispielsweise Phthalsäure- diheptyl-, -diisoheptyl-, -diisooctyl-, -di-2-ethylhexyl- oder -diisononyl-ester.

Die oben beschriebenen erfindungsgemäß einzusetzenden Polyaminoverbindungen werden als Zusatz zu Spülwasser verwendet, mit dem gereinigte harte Oberflächen bespült werden. Man erreicht damit eine Hydrophobierung von Oberflächen aus lackierten Metallen und Kunststoff, beispielsweise von lackierten Teilen von Kraftfahrzeugkarosserien, aus andersartigen lackierten Substraten, sowie von Glas-, Porzellan- oder Metalloberflächen.

Weiterhin eignen sich die beschriebenen Polyaminoverbindungen auch zur Hydrophobierung von Textil- oder Ledermaterialien.

Ein weiterer Gegenstand der vorliegenden Erfindung ist ein Verfahren zur Hydrophobierung von Oberflächen durch Behandlung derselben mit einer wäßrigen Lösung eines Hydrophobierungsmittels, bei dem als Hydrophobierungsmittel siliciumfreie Polyaminoverbindungen mit mindestens zwei Stickstoffatomen, bei denen

a) mindestens 50% der vorhandenen Stickstoffatome in der Hauptkette des Moleküls eingebunden oder unmittelbar an die Hauptkette gebunden sind,

b) das Verhältnis der Anzahl aller Kohlenstoffatome zur Anzahl aller Stickstoffatome des Moleküls mindestens 1,8 beträgt,

c) mindestens 10 %, vorzugsweise mindestens 25 %, insbesondere mindestens 40 %, aller Kohlenstoffatome des Moleküls in Einheiten aus mindestens 3 direkt aneinander gebundenen Kohlenstoffatomen enthalten sind und/oder mindestens 7 %, vorzugsweise mindestens 25 %, insbesondere mindestens 50 %, aller in die Hauptkette eingebundenen Stickstoffatome in Form tertiärer Aminogruppen vorliegen,

d) und die im Molekül keine von Lysin, Arginin, Ornithin oder Tryptophan abgeleiteten Baugruppen aufweisen,

oder eine Zubereitung derselben eingesetzt werden.

Vorzugsweise werden bei dem erfindungsgemäßen Verfahren Verbindungen - bzw. Zubereitungen von Verbindungen - der Formeln I, II, III, oder V als auch Mischungen von mehreren Spezies der einzelnen Gruppen und von Kombinationen von Vertretern mehrerer der genannten Gruppen als Hydrophobierungswirkstoff eingesetzt.

Bei dem erfindungsgemäßen Verfahren werden die genannten Wirkstoffe in Form einer wäßrigen 0,01 bis 2 gew-%igen Lösung oder Dispersion bzw. Emulsion auf die zu hydrophobierenden Flächen aufgebracht. Zweckmäßigerweise werden diese sehr verdünnten wäßrigen Behandlungslösungen dadurch hergestellt, daß man eine der oben beschriebenen erfindungsgemäßen Hydrophobierungszubereitungen in der oben angegebenen Menge in Wasser auflöst oder dispergiert Je nach der im Einzelfall erforderlichen Anwendungskonzentration und der Konzentration des Wirkstoffs in der Zubereitung des Hydrophobierungsmittels wird diese im Gewichtsverhältnis von etwa 1:50 bis 1:3000, vorzugsweise etwa 1:500 bis 1:2000, mit Wasser verdünnt. Gegebenenfalls können auch mit Wasser mischbare flüchtige Alkohole zugesetzt werden.

Die Applikation der so erhaltenen wäßrigen Lösung kann durch jede bekannte Art des Auftrag von Wirkstofflösungen auf Substrate erfolgen. Im Hinblick auf die kurze Reaktionszeit zwischen Auftrag und dem mit der Hydrophobierung verbundenen Aufreißen des Wasserfilms auf der Oberfläche des behandelten Objekts wird die Applikation zweckmäßigerweise durch Tauchen oder Aufsprühen, z.B. als letzte Spülung nach Reinigungsoperationen vorgenommen. Da die Hydrophobierungsbehandlung den zusätzlichen Effekt hat, daß das Spülwasser nach Aufreißen des Wasserfilms sehr schnell in Tropfenform abläuft und die Bildung von Trockenrückständen und Flecken vermieden werden, ist das Verfahren in vielen technischen Bereichen von großem Vorteil. Seine mengenmäßige Hauptanwendung liegt naturgemäß in der Hydrophobierung harter, geschlossener Oberflächen, insbesondere von Metall-, Lack- oder Kunststoffoberflächen. Hier wird es überwiegend als Endspülung bei der Autowäsche eingesetzt.

Es kann jedoch auch bei der Leiterplattenherstellung nach dem Abspülen der Ätzlösungen als Endpülung zur restlosen Entfernung schädlicher, korrodierend wirkender Chemikalienreste, zur schnellen Trocknung und zum Schutz der Leiterplatten gegen Kriechströme durch Feuchtigkeitsaufnahme dienen. Ganz analoge Vorteile ergeben sich, wenn erfindungsgemäße Hydrophobierungsmittel den Spülbädern bei der Galvanisierung von Metall- oder Kunststoffoberflächen zugesetzt werden.
Insbesondere aufgrund des Abperleffekt des Spülwassers und der damit verbundenen Verhütung von Trockenflecken ergeben sich erhebliche Vorteile, wenn erfindungsgemäße Hydrophobierungsmittel den Spülbädern nach der Fixierung von Filmen und Photopapieren zugesetzt werden.
Da, wie oben bereits ausgeführt, die erfindungsgemäßen Spülungen auch zur Hydrophobierung von Glas-, Porzellan- und Emailleoberflächen dienen können, eignen sie sich auch als Klarspüler beim Geschirrspülen.

Zubereitungen, die als Zusatz zu Spülwasser verwendet werden und die mindestens eine der oben beschriebenen Polyaminoverbindungen enthalten, erfüllen die Qualitätsnormen für Autopflege- und Reinigungsmittel des Industrieverbands Putz- und Reinigungsmittel e.V., Frankfurt, veröffentlicht in SÖFW, 104 Jg., 1/1978, Seite 26. Sie bewirken, daß der Wasserfilm auf metallischen oder lackierten Oberflächen oder auf Kunststoffoberflächen reißt und das Wasser leicht und möglichst vollständig abtropft oder abläuft. Dadurch wird die Bildung von Kalkflecken beim Trocknen vermieden. Die erfindungsgemäß einzusetzenden Wirkstoffe führen auch nicht zu einer unerwünschten Filmbildung auf Glasscheiben.
Die biologische Abbaubarkeit der erfindungsgemäß einzusetzenden Wirkstoffe wurde im modifizierten Sturmtest gemäß OECD-Richtlinie 301 B und im modifizierten SCAS-Test gemäß OECD-Richtlinie 302 A ermittelt. Nach OECD 201 zeigen die erfindungsgemäß einzusetzenden Polyamine im Vergleich zu den meisten kationischen Tensiden in vielen Fällen eine deutlich verringerte Algentoxizität.

Außer zur Hydrophobierung von glatten Oberflächen können die erfindungsgemäßen Hydrophobierungswirkstoffe aber auch in Form der beschriebenen wässrigen Flotten zur Hydrophobierung von Textilmaterialien, vorzugsweise dicht gewebten, insbesondere aus Synthesefasern hergestellten Textilmaterialien und von Leder eingesetzt werden. Hierzu wird die Zubereitung des Hydrophobierungsmittels im Gewichtsverhältnis von etwa 1:5 bis 1:500, vorzugsweise etwa 1:10 bis 1:100 mit Wasser verdünnt.
Ein weiterer Gegenstand der vorliegenden Erfindung ist daher die Verwendung der erfindungsgemäßen Hydrophobierungswirkstoffe zur Hydrophobierung von Textilien und Leder sowie ein Verfahren zur Hydrophobierung von Textil- und Ledermaterialien durch Imprägnieren der Materialien mit einer wäßrigen 0,1 bis 30 gew-%igen, vorzugsweise 1 bis 10 gew.-%igen Lösung oder Dispersion bzw. Emulsion der oben definierten siliciumfreien Polyaminoverbindungen.

Vorzugsweise werden auch hierbei Verbindungen der Formeln I, II, III, oder V, aber auch Mischungen von mehreren Spezies der einzelnen Gruppen oder Kombinationen von Vertretern mehrerer der genannten Gruppen als Hydrophobierungswirkstoff eingesetzt.
Vorzugsweise wird bei diesem Verfahren die Imprägnierung in an sich bekannter Weise so durchgeführt, daß die Flottenaufnahme bei Textilmaterialien und bei Ledermaterialien 1 bis 200 %, bezogen auf das Gewicht des Materials vor der Imprägnierung, beträgt.
Vorzugsweise wird dieses Verfahren zur Hydrophobierung von Regenbekleidung, Planen und Zelten sowie von Lederschutzkleidung und Schuhen, insbesondere Wanderschuhen, eingesetzt.

Aufgrund der die Hydrophobie und das Gleitvermögen von behandelten Substraten verbessernden Eigenschaften der beschriebenen siliciumfreien Polyaminoverbindungen können diese auch mit Vorteil als Wirk- oder Cokomponenten in Kettengleit- und Schmiermitteln eingesetzt werden.

Auch für diesen Zweck ist es bevorzugt, Verbindungen der Formeln I, II, III, oder V, aber auch Mischungen von mehreren Spezies der einzelnen Gruppen oder Kombinationen von Vertretern mehrerer der genannten Gruppen einzusetzen.

Zur Herstellung der erfindungsgemäß einzusetzenden Hydrophobierungsmittel kann der Chemiker auf an sich bekannte Synthesemethoden zurückgreifen.

Die erfindungsgemäß einzusetzenden Polyvinylamine der Formel I erhält man in an sich bekannter Weise durch Polymerisation von geeigneten Monomeren. Die Monomeren können als Mischung eingesetzt werden oder sie können im Verlauf der Polymerisation nacheinander zudosiert werden. Im ersten Fall erhält man Polymere in denen die Monomerbausteine statistisch verteilt sind, wobei die Konzentration der Bausteine längs der Polymerkette von der Reaktivität der Monomeren abhängt, im zweiten Fall können Blockpolymerisate hergestellt werden. Selbstverständlich

ist auch eine gezielt variierte statistische Verteilung der Monomerenbausteine möglich, indem man Monomeremischungen berechneter Zusammensetzung im Verlauf der Polymerisation zudosiert. Durch das beschriebene Vorgehen läßt sich praktisch jeder gewünschte Aufbau der Polymerenkette realisieren.
Zur Herstellung von Vinylamineinheiten enthaltenden Polymerisaten geht man beispielsweise von offenkettigen N-Vinylcarbonsäureamiden der Formel VI aus,

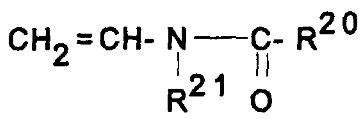

(VI)

in der $R^{20}$ und $R^{21}$ gleich oder verschieden sein können und $R^{20}$ zweckmäßigerweise für Wasserstoff oder $C_1$ - bis $C_6$-Alkyl, vorzugsweise für Wasserstoff oder $C_1$- bis $C_3$-Alkyl, und $R^{21}$ für Wasserstoff, $C_1$- bis $C_{20}$-Alkyl, $C_1$ bis $C_{10}$ Hydroxyalkyl oder Cycloalkyl mit 4 bis 8 C-Atomen steht.

Geeignete Monomere sind beispielsweise N-Vinylformamid ($R^{20}$=$R^{21}$=H in Formel VI), N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid, Methyl-vinylformamid, Ethyl-vinylformamid, Propyl-vinylformamid, Isopropyl-vinylformamid, Butyl-, Isobutyl- oder tert. Butyl-vinylformamid, Hexyl-vinylformamid, Ethylhexyl-vinylformamid, Dodecyl-vinylformamid, Tetradecyl-vinylformamid, Hexadecyl-vinylformamid, Octadecyl-vinylformamid, Eicosyl-vinylformamid, Cyclopentyl-vinylformamid, Cyclohexyl-vinylformamid, Cyclooctyl-vinylformamid.
Zur Einführung der Baugruppen $-CH_2CH(NHR^1)-$, worin $R^1$ eine der oben definierten Alkylgruppen oder Cycloalkylgruppen ist, eignen sich im Prinzip auch direkt die entsprechenden Vinylmonomeren $CH_2$=CH-$NHR^1$.

Sollen Baugruppen der Formel $-CH_2CH(NH_2)-$ eingeführt werden, so setzt man als Monomere zweckmäßigerweise die leicht zugänglichen N-Vinylkarbonsäureamide (in Formel VI $R^{21}$ = H), wie z.B. N-Vinylformamid, N-Vinylacetamid, N-Vinylpropionamid oder N-Vinylsuccinimid, ein und spaltet nach der Polymerisation den Karbonsäurerest durch Hydrolyse, vorzugsweise im basischen Medium, ab.

Zur Herstellung von Polymeren der Formel 1 mit Baugruppen der Formel $-CH_2CH(NR^3R^4)-$, worin $R^3$ und $R^4$ die oben genannten Bedeutungen haben, eignen sich Monomere der Formel $CH_2$=CH-$NR^3R^4$. Beispiele dafür sind N-Methyl-N-vinylacetamid, N-Decyl-N-vinylacetamid, N-Isobutyl-N-vinyllauroylamid, N-Hexyl-N-vinyllauroylamid, N-Methyl-N-vinylstearoylamid, N-Vinylcyclohexyl-carbonamid, Phenylessigsäure-N-vinylamid, N-Ethylhexyl-N-vinylbenzamid, Naphthoyl-N-vinylamid, N-Methyl-N-vinyl-p-ethoxybenzamid, N-Vinyl-N'-isooctylharnstoff, N-Vinyl-N'-diethylharnstoff, N-Vinyl-hexadecylurethan, N-Vinyl-cyclohexylurethan, N-Vinylpiperidin, N-Vinylpiperidon-2, N-Vinylcaprolactam, N-Vinylimidazol, N-Vinylindol, N-Vinylpyrrol, N-Vinylpyridin, N-Vinyl-succinimid, N-Vinylglutarimid, N-Vinylethoxysuccinimid, N-Vinyl-3-cyan-4-methyl-tetrahydropyridin-2,5-dion, N-Vinyl-3-ethoxycarbonyl-4-methyl-tetrahydropyridin-2,5-dion, 2-Vinylpyridin, 4-Vinylpyridin.
Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol, und N-Vinylimidazoline wie z.B. N-Vinylimidazolin, N-Vinyl-2-methylimidaszolin und N-Vinyl-2-ethylimidazolin. N-Vinylimidazole und N-Vinylimidazoline werden außer in Form der freien Basen auch in mit Mineralsäuren oder organischen Säuren neutralisierter oder quaternisierter Form eingesetzt, wobei die Quaternisierung vorzugsweise mit Dimethylsulfat, Diethylsulfat, Methylchlorid oder Benzylchlorid vorgenommen wird.

Zur Einführung von Baugruppen der Formel $-CHR^{14}-CR^5R^{15}-$, worin $R^5$, $R^{14}$ und $R^{15}$ die oben genannten Bedeutungen haben, eignen sieh eine Vielzahl von mit Vinyl-Monomeren copolymerisierbaren, monoethylenisch ungesättigten Verbindungen.
Als monoethylenisch ungesättigte Verbindungen kommen alle mit den offenkettigen Vinylcarbonsäureamiden copolymerisierbaren Verbindungen in Betracht. Beispiele hierfür sind $C_2$- bis $C_{20}$- Olefine wie Ethylen, Propen, Buten, Penten, Hexen, Halogenolefine wie Ethylenchlorid, Acrylnitril, Styrol, Vinylester gesättigten Carbonsäuren mit 1 bis 6 Kohlenstoffatomen in Carbonsäurerest wie Vinylformiat, Vinylacetat, Vinylpropionat und Vinylbutyrat. Die Vinylester eignen sich auch zur Einführung von Gruppen mit $R^5$ = OH , wobei nach der Polymerisation der Acetylrest hydrolytisch abgespalten wird.

Weitere geeignete Comonomere sind Derivate ethylenisch ungesättigter $C_3$ - bis $C_6$ - Carbonsäuren, wie z.B. Ester, Amide und Nitrile, beispielsweise Methylacrylat, Methylmethacrylat, Ethylacrylat, Ethylmethacrylat.

Weitere geeignete Carbonsäureester leiten sich von Glykolen oder von Polyalkylenglykolen ab, wobei

jeweils nur eine OH-Gruppe verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie die Acrylsäuremonoester von Polyalkylenglykolen mit einer mittleren Molmasse von 500 bis 10000. Weitere geeignete Comonomere sind die Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminomethylmethacrylat, Dimethylaminopropylacrylat, Dimethylaminopropylmethacrylat, Diethylaminopropylacrylat, Dimethylaminobutylacrylat, Diethylaminobutylacrylat.
Die basischen Acrylate können in Form der freien Basen, der Salze mit Mineralsäuren, wie Salzsäure, Schwefelsäure oder Salpetersäure, der Salze mit organischen Säuren wie Ameisensäure, Essigsäure, Propionsäure oder Sulfonsäuren oder in quaternisierter Form eingesetzt werden.
Geeignete Quaternisierungsmittel sind beispielsweise Dimethylsulfat, Diethylsulfat, Methylchlorid, Ethylchlorid oder Benzylchlorid.

Weitere geeignete Comonomere sind Amide ethylenisch ungesättigter Carbonsäuren wie Acrylamid, Methacrylamid sowie N-Mono- und N,N'-Dialkylamide von monoethylenisch ungesättigten Carbonsäuren mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und N-tert. Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Dimethylaminopropylmethacrylamid, Diethylaminopropylacrylamid, Dimethylaminobutylacrylamid und Diethylaminobutylacrylamid.
Vorzugsweise wird die Polymerisation radikalisch durchgeführt unter den Bedingungen der Emulsionspolymerisation, der Suspensionspolymerisation, oder der Lösungspolymerisation.

Dabei kann die Polymerisation in wässrigem Medium oder in organischen Lösungs- oder Dispergiermitteln ausgeführt werden, je nach dem, welches Medium im Hinblick auf die Löslichkeit der Monomeren und/oder der Polymeren zweckmäßiger erscheint. Bei der Auswahl der Lösungs- oder Dispergiermittel wird zweckmäßigerweise darauf geachtet, daß man das erhaltene Polymer ohne Zwischenisolierung weiteren Umsetzungen, z.B. der Alkylierung, Quaternisierung oder Alkoxylierung unterwerfen kann.

Zur Auslösung der Polymerisation eignen sich Polymerisationsinitiatoren, die entweder thermisch oder photochemisch zerfallen, Radikale bilden, und so die Polymerisation auslösen. Dabei sind unter den thermisch aktivierbaren Polymerisationsinitiatoren solche bevorzugt, die zwischen 20 und 180°C, insbesondere zwischen 50 und 80°C zerfallen.
Besonders bevorzugte Polymerisationsinitiatoren sind Peroxide wie Dibenzoylperoxid Di-tert.-Butylperoxid, Perester, Percarbonate, Perketale, Hydroperoxide, Azoverbindungen, Boralkylverbindungen sowie homolytisch zerfallende Kohlenwasserstoffe, aber auch anorganische Peroxide wie $H_2O_2$, Salze der Peroxoschwefelsäure und Peroxodischwefelsäure.
Radikalische Initiatorsysteme auf Basis anorganischer oder organischer Peroxide können häufig mit Vorteil in Kombination mit Schwermetall-Aktivatoren und/oder Reduktionsmitteln, die mit den Peroxiden Redoxsysteme bilden, wie z. B. Sulfiten oder Ascorbinsäure, benutzt werden.
Die Initiatoren und/oder Photoinitiatoren, die je nach den Anforderungen an das polymerisierte Material in Mengen zwischen 0,01 und 15 Gew.-%, bezogen auf die polymerisierbaren Komponenten eingesetzt werden, können einzeln oder, zur Ausnutzung vorteilhafter synergistischer Effekte, in Kombination miteinander angewendet werden.

Alkylgruppen, die für $R^1$, $R^2$ oder $R^3$ stehen, und die nicht vor der Polymerisation in das Vinylamin eingeführt worden sind, können auch nach der Polymerisation in an sich bekannter Weise durch Umsetzung des polymeren Vinylaminderivats mit Alkylierungsmitteln wie zum Beispiel Alkylhalogeniden, insbesondere Alkylchloriden und Bromiden, in Gegenwart von Säurefängern, wie Soda oder Pottasche, und geringen Mengen Alkalialkoholat oder Alkalihydroxid, in das Polymer eingeführt werden.
Natürlich lassen sich auch für $R^4$ stehende Karbonsäurereste der oben angegebenen Definition nachträglich in das Polymerisat einführen, indem man es mit reaktiven Derivaten dieser Karbonsäuren, wie z.B. den korrespondierenden Halogeniden, insbesondere den Chloriden oder Bromiden, den Anhydriden oder auch entsprechenden Niederalkylestern umsetzt, wobei die vorhandenen -NH- - Funktionen in die entsprechenden -$NR^4$- -Funktionen überführt werden.
Zu beachten ist hierbei, daß bei nachträglicher Einführung der Reste $R^4$ diese statistisch an die vorhandenen -NH- - Funktionen gebunden werden.
Das gleiche gilt für die an die Aminogruppen gebundenen Polyetherketten. Diese werden in der Regel nach der Polymerisation eingeführt. Hierzu werden die Polymeren mit Alkylenoxiden der Formel

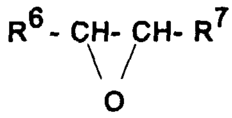

worin $R^6$ und $R^7$ die oben genannten Bedeutungen haben, umgesetzt.

Die Polyvinylamine können mit einer einzigen Alkylenoxid-Species oder mit mehreren verschiedenen umgesetzt werden. Bei der Umsetzung der Alkanole mit den Alkylenoxiden entstehen Verbindungen, die wiederum eine OH-Gruppe tragen und daher erneut mit einem Alkylenoxidmolekül reagieren können. Es werden daher je nach dem Molverhältnis von NH-Gruppen zu Alkylenoxid Reaktionsprodukte erhalten, die mehr oder weniger lange Polyetherketten aufweisen. Die Polyetherketten können 1 bis ca. 15 Alkylenoxid-Baugruppen enthalten. Bevorzugt sind Verbindungen, deren Polyetherketten 1 bis 5 Alkylenoxid-Baugruppen enthalten.

Die Ketten können aus gleichen Kettengliedern bestehen, oder sie können verschiedene Akylenoxid-Baugruppen aufweisen, die sich bezüglich ihrer Reste $R^6$ und/oder $R^7$ voneinander unterscheiden. Diese unterschiedlichen Baugruppen können innnerhalb der Kette in statistischer Verteilung oder in Form von Blöcken vorliegen.

Sollen die im Polymer vorhandenen NH-Gruppen nur mit je 1 Mol Alkylenoxid umgesetzt werden, so kann die Reaktion in der Regel im offenen Gefäß am Rückflußkühler unter Rühren bei Temperaturen von Zimmertemperatur bis zum Siedepunkt des Lösungs- oder Dispergiermittels, vorzugsweise zwischen 50 und 120°C ausgeführt werden. Die Umsetzung zwischen Alkylenoxid und den NH-Gruppen kann im Prinzip ohne Katalysator ausgeführt werden. Ist eine Beschleunigung erwünscht, so kann diese durch Zusatz geringer Mengen einer Protonensäure oder einer Base erreicht werden. Auch ist es möglich, und in manchen Fällen auch vorteilhaft, in Gegenwart von Wasser oder Alkoholen zu arbeiten.

Sollen längere Polyetherketten an die Aminogruppe gebunden werden, so wird die Alkoxylierung zweckmäßigerweise durch basische oder neutrale Katalysatoren, wie z.B. Alkali- oder Erdalkalihydroxide, Alkalialkoholate oder Verbindungen mit Schichtgitter, beispielsweise ggf. modifiziertem Hydrotalcit, katalysiert, die in der Regel in einer Menge von 0,1 bis 1 Gew.-% bezogen auf die Menge der NH-Gruppen, zugesetzt werden. Ferner empfielt es sich, die Additionsreaktion bei Temperaturen von etwa 70 bis etwa 220°C, vorzugsweise von 90 bis 150°C, im geschlossenen Gefäß auszuführen. Außerdem ist es sehr zweckmäßig, wasserfrei zu arbeiten, um die Bildung größerer Anteile von unerwünschten Nebenprodukten zu vermeiden. Besonders zweckmäßig ist es, die Alkoxylierung zweistufig auszuführen, wobei zunächst eine Monoalkylierung der Aminofunktionen ausgeführt wird, anschließend gegebenenfalls vorhandenes Wasser oder Alkanole entfernt werden, und danach in Gegenwart der genannten Katalysatoren die Polyalkoxylierung vorgenommen wird (Vergl. DE-A-4435688).

Das Alkylenoxid oder die Mischung verschiedener Alkylenoxide wird der Lösung oder Dispersion des Polyvinylamins und Alkalis unter dem bei der gewählten Reaktionstemperatur herrschenden Dampfdruck des Alkylenoxidgemisches zugeführt. Gewünschtenfalls kann das Alkylenoxid mit bis zu etwa 30 bis 60 % mit einem Inertgas verdünnt werden. Dadurch wird eine zusätzliche Sicherheit gegen explosionsartige Polyaddition des Alkylenoxids gegeben.
Wird ein Alkylenoxidgemisch eingesetzt, so werden Polyetherketten gebildet, in denen die verschiedenen Alkylenoxidbausteine praktisch statistisch verteilt sind. Variationen in der Verteilung der Bausteine längs der Polyetherkette ergeben sich aufgrund unterschiedlicher Reaktionsgeschwindigkeiten der Komponenten und können auch willkürlich durch kontinuierliche Zufuhr einer Alkylenoxidmischung programmgesteuerter Zusammensetzung erreicht werden. Werden die verschiedenen Alkylenoxide nacheinander zur Reaktion gebracht so erhält man Polyetherketten, mit blockartiger Verteilung der Alkylenoxid-Bausteine.
Die Länge der Polyetherketten schwankt innerhalb des Reaktionsprodukts statistisch um einen Mittelwert, der im wesentlichen dem sich aus der Zusatzmenge ergebenden stöchiometrischen Wert entspricht.

Wird eine Quaternisierung der Aminogruppen der Polymere der Formel I gewünscht, so kann diese leicht durch Umsetzung der Polyaminoverbindungen mit Alkylierungsmitteln, vorzugsweise bei leicht erhöhter Temperatur (z.B. 50-80°C) in einem Lösungs- oder Dispergiermittel - vorzugsweise demselben, in dem die Herstellung der Polymerisate erfolgte - ausgeführt werden. Geignete Alkylierungsmittel sind Alkylhalogenide z.B. Methylchlorid, Aralkylhalogenide wie z.B. Benzylchlorid oder Alkylsulfate wie z.B. Dimethylsulfat, Butylbromid-4, oder 2-Ethylhexylchlorid-6. Der Umsatz bei dieser Reaktion kann, wie oben bei der Alkylierung beschrieben, durch Zusatz von Säurefängern verbessert werden. Verbindungen der Formel II werden zweckmäßigerweise durch Polymerisation von Ethylenimin in an sich bekannter Weise und anschließende Alkylierung oder Acylierung und gegebenenfalls Quaternisierung der -NH- -Funktionen des Polymeren hergestellt.
Die Polymerisation von Ethylenimin erfolgt unter Säurekatalyse in Wasser oder organischen Lösungs- oder Dispergiermitteln . Normalerweise wird die Polymerisation bei Temperaturen von 60 bis 120°C ausgeführt (Vergl. US-A-2,182,306 und US-A-2 223 930). Sie führt zu Polymerisaten mit einem durchschnittlichen Molgewicht von 10000 bis 20000. Sollen Polymere mit höherem Molgewicht hergestellt werden, so setzt man die durch Polymerisation hergestellten Produkte mit difunktionellen Alkylierungsmitteln, wie z.B. Dichlorethan um.
Niedrigere Molgewichte können hergestellt werden, indem man die Polymerisation in Gegenwart geringer Mengen von Diaminen, wie z.B. 1,2-Diaminoethan, ausführt.

Die Alkylierung, Acylierung und Quaternisierung der -NH- Funktionen des Polymeren kann in der gleichen Weise und unter Verwendung der gleichen Substanzen ausgeführt werden, wie es oben für die nachträgliche Alkylierung, Alkoxylierung oder Acylierung und Quaternisierung der Polyvinylamine der Formel I beschrieben worden ist.

Verbindungen der Formel III können auf verschiedenen Wegen hergestellt werden. Allgemein gangbar ist die Umsetzung von Alkylendiaminen der Formel $H_2N\text{-}C_nH_{2n}\text{-}NH_2$ mit Dihalogenverbindungen der Formel Hal-$C_nH_{2n}$-Hal, worin der zweiwertige Rest -$C_nH_{2n}$- jeweils die in der Formel IV angegebene Struktur hat, und anschließende Alkylierung oder Acylierung der -NH- und -$NH_2$ - Funktionen der Polyaminkette mit einem Alkylierungs- oder Acylierungsmittel X-$R^9$, z.B. einem Alkylhalogenid, Acylhalogenid oder Karbonsäureanhydrid oder mit einem Alkylenoxid. Die Reaktionsbedingungen - Temperatur, Lösungs- oder Verdünnungsmittel und Katalysator/Säurefänger - der Alkylierung entsprechen den oben bereits bei der Herstellung der Verbindungen der Formel I besprochenen. Bei der hier erforderlichen Umsetzung der Diamine mit den Dihalogeniden wird zweckmäßigerweise ein großer Überschuß an Diamin vorgelegt und das Dihalogenid langsam zudosiert um eine Mehrfachalkylierung der primären Aminogruppe zu vermeiden. Durch geeignete Wahl des Aminüberschusses kann die Kettenlänge in dem gewünschten Bereich eingestellt werden.
Eine Variante dieser Reaktion, bei der ein Mehrfachalkylierung der primären Aminogruppen vermieden wird, besteht in der Alkylierung von Aldiminen, die man leicht durch Umsetzung der Diamine mit Aldehyden, vorzugsweise mit Benzaldehyd, erhalten kann, nach Decker-Forster. Aus dem dabei zunächst entstehenden Immoniumsalz erhält man durch protonenkatalysierte Hydrolyse die gewünschten Alkylierungsprodukte.
Eine weitere Variante der Herstellung von Verbindungen der Formel III, besteht in der Umsetzung von Dihalogenverbindungen Hal-$C_nH_{2n}$-Hal, worin -$C_nH_{2n}$- die Struktur IV hat, mit Aminen der Formel $NH_2R^9$. Diese Variante kann dann ausgeführt werden, wenn der Substituent $R^9$ die Basizität der Aminogruppe nicht zu stark herabsetzt. Auch diese Reaktion wird zweckmäßigerweise unter den oben bereits beschriebenen Alkylierungsbedingungen ausgeführt.
Die beschriebenen Reaktionen können mit einzelnen Spezies der Diamine und Dihalogenverbindungen ausgeführt werden, sodaß Ketten erhalten werden in denen die Kettenglieder alle die gleiche Struktur haben. Man kann jedoch auch Gemische von Diaminen, und/oder Gemische von Dihalogenverbindungen, die in den Rahmen der angegebenen Strukturformel fallen, zur Reaktion bringen. Man erhält dann Verbindungen der Formel III, in denen die Kettenglieder in statistischer Verteilung die Strukturen der eingesetzten Diamine und/oder Dihalogenverbindungen aufweisen.

Eine elegante Methode zum systematischen Aufbau von Verbindungen der Formel III besteht in der Umsetzung von Ammoniak oder Aminen mit Acrylnitril und anschließende Hydrierung. So kann man beispielsweise das 1,3-Diaminopropan und Bis-(3-aminopropyl)-amin durch Umsetzung von Acrylnitril mit $NH_3$ und anschließende Hydrierung erhalten. In analoger Weise lassen sich 3-Aminopropyl-substituierte Amine ausgehend von Mono-, Di- und Polyaminen herstellen. Beispiele für auf diesem Weg herstellbare Verbindungen sind Bis-(3-aminopropyl)-methylamin oder Tripropylentetramin oder Bis-(3-aminopropyl)-piperazin.

Auf ähnliche Weise sind auch die Piperazinderivate der Formel V zugänglich. Hier werden Diamine der Formel $H_2N\text{-}C_rH_{2r}\text{-}R^{10}R^{11}$ oder $H_2N\text{-}C_rH_{2r}NR^{12}R^{13}$, worin der zweiwertige Baustein -$C_rH_{2r}$- die Struktur IV hat, in verdünnter Lösung in einem organischen Lösungs- oder Dispergiermittet in Gegenwart von Säurefängern unter Alkylierungsbedingungen mit 1,2-Dichlorethan umgesetzt. Als Nebenprodukte werden lineare Polyethylenimin-Derivate erhalten. Ein alternativer Weg besteht auch hier in der Umsetzung der den primären Aminen entsprechenden Aldiminen mit Dichlorethan im Molverhältnis 2:1, Hydrolyse der Immoniumverbindung und Ringschluß mit einem zweiten Mol Dichlorethan in verdünnter Lösung.

Auch bei der Herstellung der Piperazinderivate der Formel V können einzelne Spezies der Diamine und Dihalogenverbindungen eingesetzt werden, sodaß Piperazine erhalten werden, die an beiden Stickstoffatomen gleiche Substituenten tragen. Man kann jedoch auch Gemische von Diaminen, und/oder Gemische von Dihalogenverbindungen, die in den Rahmen der angegebenen Strukturformel fallen, zur Reaktion bringen. Man erhält dann Verbindungen der Formel V, in denen die Substituenten der Stickstoffatome der Piperazine in allen möglichen Kombinationen vorliegen.

Auch zur Herstellung erfindungsgemäß einzusetzender Piperazine kann die Umsetzung von Ammoniak oder Aminen mit Acrylnitril und anschließende Hydrierung dienen. So kann man beispielsweise das Bis-(3-aminopropyl)-piperazin durch Umsetzung von Acrylnitril mit Piperazin zu N,N'-Bis(2-cyanethyl)-piperazin und anschließende Hydrierung erhalten.

Besonders bevorzugt sind auch solche Ausführungsformen der Erfindung die eine Kombination von mehreren bevorzugten Merkmalen aufweisen.

Die folgenden Ausführungsbeispiele veranschaulichen die Herstellung erfindungsgemäß einzusetzender

Polyamine der Formeln I, II, III und V, die Herstellung einer erfindungsgemäße Hydrophobierungszubereitung sowie deren Applikation in erfindungsgemäßen Hydrophobierungsverfahren.
Die mittleren Molmassen $M_w$ der erfindungsgemäß einzusetzenden höhermolekularen Polyamine wurde mit Hilfe der wäßrigen Gelpermeationschromatographie (GPC) mit einer Mischung aus Acetonitril und Wasser im Volumenverhältnis von 20 zu 80 als mobile Phase bestimmt. Als stationäre Phase verwendet man Kolonnen, die mit Waters Ultrahydrogel 500, 250, 250 und 120 gefüllt waren. Bei der GPC verwendete man einen UV-Detektor, die Wellenlänge des verwendeten Lichtes betrug 230 nm. Für die Eichung wurden Pullulan-Standards mit enger Molmassenverteilung verwendet. Die in den Beispielen angegebenen K-Werte werden nach H.Fikentscher, Cellulosechemie 13, (1932), Seiten 58 bis 64 und 71 bis 74, in 0,5 gew.-%iger wäßriger Kochsalzlösung bei einer Temperatur von 25°C bestimmt. Dabei bedeutet $K=k^* 10^3$
Die Angaben in % bedeuten, soweit nichts anderes angegeben ist, Gewichtsprozent.

**Beispiel 1**

In einem Kolben, der mit Rührer, Thermometer und einer Vorrichtung für das Arbeiten unter Stickstoff ausgerüstet ist, werden 80 g (1125 mMol) Vinylformamid in 385 g Wasser gelöst. Der Lösung werden 1,3 g (4,8 mMol) Azo-bis-(2-amidinopropan)-hydrochlorid zugefügt, die Luft im Kolben wird durch Spülen mit Stickstoff entfernt, und das Reaktionsgemisch innerhalb einer halben Stunde auf 60°C erwärmt. Der Ansatz wird 5 Stdn. bei dieser Temperatur gerührt. Danach beträgt der Umsatz 99,3 %.
Die so erhaltene Polymerisatlösung (K-Wert = 81) wird mit 450 g 10 gew.-%iger Natronlauge (1125 mMol) versetzt und 5 Stunden bei 80°C gerührt. Man erhält 916 g einer wäßrigen Polymerisatlösung mit einer Viskosität, gemessen nach Brookfield bei 25°C, von 140 mPas. Der Hydrolysegrad des Polymerisats betrug 90%.

**Beispiel 2**

In der im Beispiel 1 angegebenen Apparatur werden 80 g (1125 mMol) Vinylformamid in 385 g Wasser gelöst. Der Lösung werden 0,65 g (2,4 mMol) Azo-bis-(2-amidinopropan)-hydrochlorid zugefügt, die Luft im Kolben wird durch Spülen mit Stickstoff entfernt, und das Reaktionsgemisch innerhalb einer halben Stunde auf 55°C erwärmt. Der Ansatz wird 5 Stdn. bei dieser Temperatur gerührt. Danach beträgt der Umsatz 98,1 %.
Die so erhaltene Polymerisatlösung (K-Wert = 95) wird mit 23 g 36 gew.-%iger Salzsäure (227 mMol) versetzt und 3 Stunden bei 80°C unter Rühren hydrolysiert. Man erhält 489 g einer wäßrigen Polymerisatlösung mit einer Viskosität, gemessen nach Brookfield bei 25°C, von 16000 mPas. Der Hydrolysegrad des Polymerisats betrug 20 %.

**Beispiel 3**

In analoger Weise wie in den Beispielen 1 und 2 beschrieben werden erfindungsgemäß einzusetzende Polyamine der Formel (I) erhalten, wenn man anstelle der dort eingesetzten 80 g Vinylformamid

3A) 53 g Vinylformamid + 42 g Vinylpyrrolidon,
3B) 71 g Vinylformamid + 14 g N-Vinyl-5-methylimidazol,
3C) 71 g Vinylformamid + 29 g 1-Vinyl-2,3-dimethylimidazolium-methosulfat,
3D) 71 g Vinylformamid + 14 g N-Vinyl-butyramid oder
3E) 53 g Vinylformamid + 26,5 g Vinylpyridin + 11 g Vinylacetat

einsetzt.

**Beispiel 4**

Der in Beispiel 2 beschriebene Ansatz wird wiederholt mit dem Unterschied, daß die salzsaure Hydrolyse solange fortgesetzt wird bis der Hydrolysegrad 50 % beträgt.
Die saure Polymerlösung wird mit 90 ml 10 gew.%-iger Natronlauge versetzt und im Rotationsverdampfer soweit wie möglich eingeengt. Der Rückstand wird in 200 ml Isopropanol aufgenommen, vom ausgeschiedenen Kochsalz abfiltriert und das Filtrat erneut eingedampft.
Das so erhaltene Polymerisat (55,8 g entsprechend ca. 87% der Theorie) wird mit 50 ml Wasser gemischt und in einen Rührautoklaven eingebracht. Der Autoklav wird geschlossen, unter Rühren auf 90°C erwärmt und bei 90 bis 100°C im Verlauf von 30 min. 62 g Propylenoxid unter einem maximalen Druck von 4 bar zudosiert. Man rührt noch 1 Stunde bei dieser Temperatur nach, kühlt den Autoklav auf Zimmertemperatur ab und entnimmt das Reaktionsprodukt. Das erhaltene Polymerisat enthält ca. 50 Mol-% Vinylformamid-Bausteine, und ca. 50 Mol.-% Vinylamingruppen deren Aminogruppen im Mittel 1,92 Hydroxypropylgruppen tragen.

**Beispiel 5**

Das Beispiel 4 wird wiederholt, das erhaltene wasserhaltige Hydroxypropyl-Polymer mit 200 ml Toluol und 3 ml 50 gew.%-iger Kalilauge versetzt und unter Rühren das Wasser azeotrop ausgekreist. Wenn das Wasser restlos entfernt ist, werden 100 ml Toluol im Vakuum abdestilliert, und die Mischung in einen Rührautoklav überführt. Bei einer Temperatur von 130 bis 140°C werden im Verlauf von 15 bis 20 Stunden 150 g Propylenoxid unter einem maximalen Druck von 4 bar zudosiert. Man rührt noch 3 Stunden bei dieser Temperatur nach, kühlt den Autoklav auf Zimmertemperatur ab und entnimmt das Reaktionsprodukt. Das erhaltene Polymerisat enthält ca. 35 Mol-% Vinylformamid-Bausteine, und ca. 65 Mol.-% Vinylamingruppen deren Aminogruppen im Mittel 3,5 Hydroxypropylgruppen tragen.

Die Beispiele 4 und 5 können analog auch unter Einsatz der in den Beispielen 3A bis 3F erhaltenen Polymeren anstelle des Polymeren des Beispiels 2 ausgeführt werden. In allen Fällen werden dann die entsprechenden propoxylierten Polymeren erhalten.

Die Alkoxylierungen können auch unter den gleichen Reaktionsbedingungen ausgeführt werden wenn anstelle von Propylenoxid äquivalente Mengen von Ethylenoxid oder Butylenoxid oder von Mischungen von Ethylenoxid, Propylenoxid und/oder Butylenoxid eingesetzt werden.

**Beispiel 6**

In einem Autoklaven werden 43 g eines handelsüblichen Polyethylenimins mit einem gewichtsgemittelten Molekulargewicht von ca. 20000 zusammenmit 43 g Wasser vorgelegt. Unter Rühren werden dann bei einer Temperatur von 90 bis 100°C und einem Druck von maximal 4 bar im Verlauf von 30 Minuten 58 g Propylenoxid zudosiert. Man rührt noch 1 Stunde nach, kühlt den Autoklav auf Raumtemperatur ab und entnimmt das monopropoxylierte Polyethylenimin. Es enthält ca. 1 Hydroxypropylgruppe pro Polyethylenimin-Stickstoff.

**Beispiel 7**

Das Beispiel 6 wird wiederholt, das erhaltene wasserhaltige Hydroxypropyl-Polymer mit 200 ml Toluol und 10 ml 50 gew.-%iger Kalilauge versetzt und unter Rühren das Wasser azeotrop ausgekreist. Wenn das Wasser restlos entfernt ist, werden 100 ml Toluol im Vakuum abdestilliert, und die Mischung in einen Rührautoklav überführt. Bei einer Temperatur von 130 bis 140°C werden im Verlauf von 15 bis 20 Stunden 290 g Propylenoxid unter einem maximalen Druck von 4 bar zudosiert. Man rührt noch 3 Stunden bei dieser Temperatur nach, kühlt den Autoklav auf Zimmertemperatur ab und entnimmt das Reaktionsprodukt. Das so hergestellte propoxylierte Polyethylenimin enthält pro Polyethylenimin-Stickstoff ca. 6 PO-Einheiten.

**Beispiel 8**

In einem Vierhals-Schliffkolben mit Rührer, Thermometer, Rückflußkühler und Tropftrichter werden 43 g eines handelsüblichen Polyethylenimins mit einem gewichtsgemittelten Molekulargewicht von ca. 20000, 200 ml trokkenes Toluol und 10,6 g fein gepulverte calzinierte Soda verrührt und auf 60°C erwärmt. Im Verlauf von 1 Stunde werden 13,7 g n-Butylbromid zugetropft, 1 Stunde bei 60°C nachgerührt, die Temperatur auf 30°C gesenkt und dann im Verlauf von 30 Min. 7,9 g Acetylchlorid zugetropft.

Nach Zulauf des Acetylchlorids wird der Ansatz noch eine Stunde bei 50°C nachgerührt. Nach dem Abkühlen wird die Lösung des Polymers von den ungelösten Salzen abfiltriert, der Salzrückstand zweimal mit 20 ml Toluol gewaschen und das Filtrat am Rotationsverdampfer eingedampft.

Das erhaltene Polymer enthält, bezogen auf 100 Mol-% Ethylenimin-Baugruppen, jeweils ca. 10 Mol-% n-Butyl- und Acetylreste.

**Beispiel 9**

Das Beispiel 8 wird wiederholt und das erhaltene partiell butylierte und acetylierte Polymer in einen Rührautoklaven zusammen mit 43 g Wasser vorgelegt. Unter Rühren werden dann bei einer Temperatur von 90 bis 100°C und einem Druck von maximal 4 bar im Verlauf von 30 Minuten 50 g Propylenoxid zudosiert. Man rührt noch 1 Stunde nach, kühlt den Autoklav auf Raumtemperatur ab und entnimmt das Polyethyleniminderivat. Es enthält, bezogen auf 100 Mol-% Ethylenimin-Baugruppen jeweils ca. 10 Mol-% n-Butyl- und Acetylreste und ca. 80 Mol-% 2-Hydroxypropylgruppen.

**Beispiel 10**

A) In einem Vierhals-Schliffkolben mit Rührer, Thermometer, Rückflußkühler und Tropftrichter werden 430 g eines handelsüblichen Bishexamethylentriamin (Di-(6-Amino-n-hexyl)-amin) und 80 g Methanol vorgelegt und unter Rühren auf 60°C erwärmt. Dann werden unter Wasserbadkühlung bei dieser Temperatur innerhalb von 30 bis 45 Min. 208 g Acrylnitril zugetropft, und der Ansatz noch 15 Minuten bei 60°C und 4 Stunden bei Raumtemperatur nachgerührt. Methanol und Spuren von Acrylnitril werden im Vakuum abgezogen. Man erhält 630 g Cyanethylierungsprodukt mit einer Gesamtamin-Zahl (bestimmt durch Titration nach DIN 16945) von 498 mg KOH/g Substanz, und einer tert.-Amin-Zahl (bestimmt durch Titration nach DIN 16945) von 59,9 mg KOH/g Substanz Das Produkt besteht somit im wesentlichen aus Di-(6-Cyanethylamino-n-hexyl)-amin.

B) 500 g des gemäß Abschnitt A) erhaltenen Nitrils, 500 g N-Methylpyrrolidon und 50 g (10 Gew.-% auf Nitril bezogen) Raney-Kobalt (in N-Methylpyrrolidon aufgerührt, so daß der Wassergehalt nach KFT unter 0,5 Gew.-% liegt) werden in einem Rührautoklaven vorgelegt. Der Autoklav wird geschlossen, abgepreßt und dreimal mit Stickstoff gespült. Dann werden 530 ml $NH_3$ und Wasserstoff bis zu einem Druck von ca. 50 bar bei Raumtemperatur zudosiert.
Der Autoklav wird dann auf 100°C erwärmt, der Wasserstoffdruck bis auf 100 bar erhöht und solange nachgepreßt, bis keine Aufnahme mehr erfolgt (3 Stdn. Druckkonstanz).
Danach wird die Temperatur auf 150°C und der Wasserstoffdruck auf 150 bar erhöht, und 1 Stunde unter diesen Bedingungen nachgerührt. Danach wird der Autoklav abgekühl und entspannt, viermal mit Stickstoff gespült und der Inhalt entnommen.
Aus dem erhaltenen Reaktionsgemisch wird das Raney-Kobalt durch Druckfiltration abgetrennt, und das Filtrat im Rotationsverdampfer entgast. Das Hydrierungsprodukt hat eine Gesamtamin-Zahl (bestimmt durch Titration nach DIN 16945) von 810 mg KOH/g Substanz, und eine tert.-Amin-Zahl (bestimmt nach DIN 16945) von 3 mg KOH/g Substanz. Das Produkt besteht somit im wesentlichen aus N,N''-Bisaminopropyl-bishexamethylentriamin ("Bishexamethylenpentamin").

C) 330 g des so erhaltenen Produkts werden in einem geschlossenen Rührautoklaven auf 120°C erwärmt und im Verlauf von 1 Stunde 44 g Ethylenoxid eingedrückt. Man rührt noch 2 Stunden nach, kühlt den Autoklav auf Zimmertemperatur ab und entnimmt das partiell alkoxylierte Bishexamethylenpentamin bei dem im statistischen Mittel etwa 20 % der Aminogruppen Hydroxyethylgruppen tragen.

**Beispiel 11**

330 g des gemäß Beispiel 10, Abschnitte A) und B) erhaltenen Produkts werden in einem geschlossenen Rührautoklaven auf 120°C erwärmt und im Verlauf von 2 -3 Stunden 308 g Ethylenoxid zudosiert. Der Druck steigt dabei auf ca. 5 bar. Man rührt noch 2 Stunden nach, kühlt den Autoklav auf Zimmertemperatur ab und entnimmt das alkoxylierte Bishexamethylenpentamin. Es weist im statistischen Mittel pro Mol 7 Mol EO-Gruppen auf.

**Beispiel 12**

A) In einem Vierhals-Schliffkolben mit Rührer, Thermometer, Rückflußkühler und Tropftrichter werden 258 g handelsübliches Piperazin und 270 g Methanol vorgelegt und unter Rühren auf 60°C erwärmt. Dann werden unter Wasserbadkühlung bei dieser Temperatur innerhalb von 45 bis 60 Min. 312 g Acrylnitril zugetropft, und der Ansatz noch 15 Minuten bei 60°C und 4 Stunden bei Raumtemperatur nachgerührt. Methanol und Spuren von Acrylnitril werden im Vakuum abgezogen. Man erhält 590 g Cyanethylierungsprodukt mit einer Gesamtamin-Zahl (bestimmt durch Titration nach DIN 16945) von 191 mg KOH/g Substanz, und einer tert.-Amin-Zahl (bestimmt durch Titration nach DIN 16945) von 199 mg KOH/g Substanz. Das Produkt besteht somit im wesentlichen aus N,N'-bis-Cyanethylpiperazin.

B) 500 g des gemäß Abschnitt A) erhaltenen Nitrils, 500 g N-Methylpyrrolidon und 50 g (10 Gew.-% auf Nitril bezogen) Raney-Kobalt (in N-Methylpyrrolidon aufgerührt, so daß der Wassergehalt nach KFT unter 0,5 Gew.-% liegt) werden in einem Rührautoklaven vorgelegt. Der Autoklav wird geschlossen, abgepreßt und dreimal mit Stickstoff gespült. Dann werden 530 ml $NH_3$ und Wasserstoff bis zu einem Druck von ca. 50 bar bei Raumtemperatur zudosiert.
Der Autoklav wird dann auf 100°C erwärmt, der Wasserstoffdruck bis auf 100 bar erhöht und solange nachgepreßt, bis keine Aufnahme mehr erfolgt (3 Stdn. Druckkonstanz).
Danach wird die Temperatur auf 150°C und der Wasserstoffdruck auf 150 bar erhöht, und 1 Stunde unter diesen Bedingungen nachgerührt. Danach wird der Autoklav abgekühlt und entspannt, viermal mit Stickstoff gespült und der Inhalt entnommen.
Aus dem erhaltenen Reaktionsgemisch wird das Raney-Kobalt durch Druckfiltration abgetrennt, das Filtrat im Rotationsverdampfer entgast und der Rückstand im Vakuum destilliert.
Das Hydrierungsprodukt geht bei einem Druck von 0,8 mbar bei 135 bis 145°C über; es hat eine Gesamtamin-Zahl (bestimmt durch Titration nach DIN 16945)von 1077 mg KOH/g Substanz, und eine tert.-Amin-Zahl (bestimmt durch Titration nach DIN 16945) von 544 mg KOH/g Substanz. Das Produkt besteht somit im wesentlichen aus N,N'-Bisaminopropylpiperazin.

**Beispiel 13**

200 g des gemäß Beispiel 12 erhaltenen N,N'-Bisaminopropyl-piperazins werden in einem geschlossenen Rührautoklaven auf 140°C erwärmt und im Verlauf von 2 - 2,5 Stunden 295 g Butylenoxid zudosiert. Der Druck steigt dabei auf ca. 4 bar. Man rührt noch 2 Stunden nach, kühlt den Autoklav auf Zimmertemperatur ab und entnimmt das alkoxylierte N,N'-Bisaminopropyl-piperazin. Es weist im statistischen Mittel pro Mol 4,1 Mol BuO-Gruppen auf.

**Beispiel 14**

**Herstellung einer erfindungsgemäß einzusetzenden Hydrophobierungszubereitung**

A) In einem 1500 ml- Dreihalskolben mit Rührer, Thermometer und Tropftrichter werden 200 ml vollentsalztes Wasser, 20 g oxethyliertes Nonylphenol mit 4 Mol EO/OH und 10 g Kokosfett-trimethylammoniumchlorid vorgelegt.
B) In einem Erlenmeyerkolben werden unter Schütteln und gelindem Erwärmen 100 g Polyethylenimin, Molgew. 5000, propoxyliert mit 1 Mol PO/NH, und 12 g Glykol-mono-butylether und 50 ml vollentsalztes Wasser homogenisiert.

Die unter B) hergestellte Mischung wird unter Rühren in die unter A) beschriebene Emulgator- und Netzmittellösung eingetropft. Wenn die Lösung B) vollständig zugelaufen ist, läßt man in die Mischung 30 g 50 gew.-%ige Ameisensäure eintropfen.
Die so erhaltene Zubereitung kann ohne Schwierigkeiten in einem großen Wasserüberschuß aufgelöst werden.

**Beispiel 15**

**Prüfung erfindungsgemäß einzusetzender, siliconfreier Polyaminoverbindungen auf hydrophobierende Wirkung.**

Die folgenden Verbindungen wurden der Prüfung auf hydrophobierende Wirkung unterzogen:

Verbindung 1: Polyvinylamin, Molgewicht 30000
Verbindung 2: Polyvinylamin, Molgewicht 7000
Verbindung 3: Polyvinylamin, Molgewicht 2000
Verbindung 4: Polyvinylamin, Molgewicht 600
Verbindung 5: 1,3-Diaminopropan mit 6 Mol EO ethoxyliert.
Verbindung 6: N,N''-Bis-(aminopropyl)-bis-(hexamethylen)-triamin, mit 9,1 Mol EO ethoxyliert.
Verbindung 7: N,N'-Bis-(aminopropyl)-piperazin, mit 11,5 Mol PO propoxyliert.
Verbindung 8: N,N'-Bis-(aminopropyl)-piperazin, mit 4 Mol PO propoxyliert.
Verbindung 9: N,N'-Bis-(aminopropyl)-piperazin, mit 4,1 Mol BuO butoxyliert.
Verbindung 10: Polyethylenimin, Molgewicht 1300, butoxyliert mit 1 BuO/NH.
Verbindung 11: Polyethylenimin, Molgewicht 5000, propoxyliert mit 1 PO/NH.
Verbindung 12: Vergleich: Ditalgfett-dimethylammoniumchlorid.
Verbindung 13: Vergleich: Ditalgfettisopropylester-dimethylammoniummethosulfat.

Die Prüfung erfolgte nach zwei Methoden. Prüfung A wurde durchgeführt gemäß den in der Zeitschrift "Seifen, Öle, Fette und Wachse", Jahrgang 1, (1978), Seite 104, angegebenen Richtlinien.

Die Prüfling B wurde wie folgt durchgeführt:

Zunächst wurde eine Zubereitung hergestellt enthaltend 10 Gew.-% einer der oben genannten Wirksubstanzen, 3 Gew.-% Esigsäure konz. und 5 Gew.-% Butyldiglycol in Wasser.
In einem Becherglas wurde diese Zubereitung mit Leitungswasser im Verhältnis 1:1000 verdünnt.
Lackierte Prüfbleche wurden 5 Sekunden lang in die verdünnte Lösung eingetaucht, dann herausgezogen und das Ablaufverhalten beobachtet und benotet.
Gleichzeitig erfolgte am Rand des Becherglases eine Beurteilung des Netzverhaltens der Lösung auf Glas.
Die Bewertung erfolgte mit den Noten 1 bis 5, wobei die beste Note, die Note 1, spontanes Aufreißen des Wasserfilms, keine Benetzung und keine größeren Tropfen bedeutet. Note 5 bedeutet unvollständiges Aufreißen des Wasserfilms, Benetzungsstellen werden sichtbar. Geprüft wurde im Vergleich mit einem handelsüblichen Hydrophobierungsmittel, das fertig konfektioniert eingesetzt wurde.

Die folgende Tabelle zeigt die bei dieser Prüfling erhaltenen Ergebnisse.

Tabelle

| Wirkstoff Nr. | Prüfung A | | Prüfung B |
|---|---|---|---|
| | Hydrophobierung [Note] | Konservierung [Note] | Hydrophobierung [Note] |
| Nr. 1 | 2 | 2 - 3 | 2 |
| Nr. 2 | 2 | 2 - 3 | 2 |
| Nr. 3 | 1 - 2 | 1 - 2 | 1 - 2 |
| Nr. 4 | 1 | 1 | 1 |
| Nr. 5 | 1 - 2 | 1 - 2 | 1 -- 2 |
| Nr. 6 | 1 - 2 | 1 - 2 | 1 - 2 |
| Nr. 7 | 2 | 2 | 2 |
| Nr. 8 | 1 | 1 - 2 | 1 |
| Nr. 9 | 1 | 1 - 2 | 1 |
| Nr. 10 | 1 | 1 | 1 |
| Nr. 11 | 1 | 1 | 1 |
| Vergl. 1 | 2 | 2 | 2 |
| Vergl. 2 | 2 | 2 | 2 |
| Ohne Zusatz | 5 | 5 | 5 |

**Patentansprüche**

1. Verwendung von siliciumfreien Polyaminoverbindungen mit mindestens zwei Stickstoffatomen, bei denen

    a) mindestens 50% der vorhandenen Stickstoffatome in der Hauptkette des Moleküls eingebunden oder unmittelbar an die Hauptkette gebunden sind,
    b) das Verhältnis der Anzahl aller Kohlenstoffatome zur Anzahl aller Stickstoffatome des Moleküls mindestens 1,8 beträgt,
    c) 10 %, vorzugsweise mindestens 25 %, insbesondere mindestens 40 %, aller Kohlenstoffatome des Moleküls in Einheiten aus mindestens 3 direkt aneinander gebundenen Kohlenstoffatomen enthalten sind und/oder mindestens 7 %, vorzugsweise mindestens 25 %, insbesondere mindestens 50 %, aller in die Hauptkette eingebundenen Stickstoffatome in Form tertiärer Aminogruppen vorliegen,
    d) und die im Molekül keine von Lysin, Arginin, Ornithin oder Tryptophan abgeleiteten Baugruppen aufweisen, als Hydrophobierungswirkstoff.

2. Verwendung gemäß Anspruch 1, dadurch gekennzeichnet, daß als Polyaminoverbindung Polyvinylamine der For-

mel I,

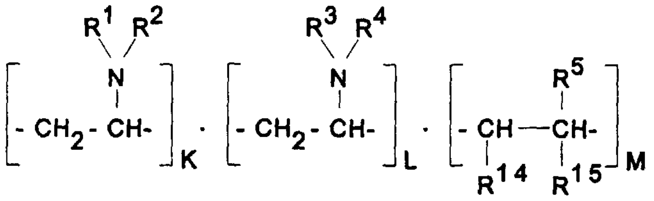

(I)

eingesetzt werden,

worin der Quotient K+L/(K+L+M) einen Betrag von 0,1 bis 1 und der Quotient M/(K+L+M) einen Betrag von 0 bis 0,9 hat, wobei die Vinylamin-Baugruppen und die Comonomer-Baugruppen in der Polymerkette in statistischer Verteilung oder in Form von Blöcken vorliegen können, $R^1$ und $R^2$ gleich oder verschieden sind und Wasserstoff, lineares oder verzweigtes Alkyl mit 1 bis 20 C-Atomen, lineares oder verzweigtes Hydroxyalkyl mit 2 bis 10 C-Atomen, Cycloalkyl mit 4 bis 8 C-Atomen oder Polyetherketten der Formel $(-CHR^6-CHR^7-O-)_mH$ bedeuten,

worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann,

und $R^3$ Wasserstoff oder lineares oder verzweigtes Alkyl mit 1 bis 20 C-Atomen oder Cycloalkyl mit 4 bis 8 C-Atomen und $R^4$ Alkanoyl mit linearer oder - sofern die Kette mehr als 2 C-Atome aufweist - verzweigter Alkylkette mit 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen oder Alkyloxycarbonyl mit 1 bis 20 C-Atomen bedeuten oder $R^3$ und $R^4$ gemeinsam einen zweiwertigen, linearen gesättigten oder ungesättigten Rest mit 4 oder 5 C-Atomen, oder 3 oder 4 C-Atomen und einem Heteroatom, bilden, der mit dem N-Atom, an das er gebunden ist, einen 5- oder 6-gliedrigen heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann,

und die Aminogruppen $-NR^1R^2$ und - soweit weder $R^3$ noch $R^4$ eine dem Stickstoffatom benachbarte Carbonylfünktion aufweisen, auch $-NR^3R^4$ - auch zu

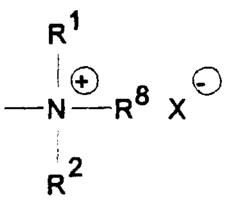 bzw. 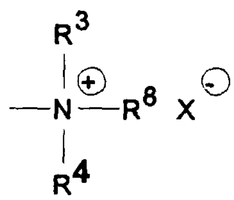

quaternisiert sein können, wobei $R^8$ Alkyl mit 1 bis 10 C-Atomen oder Phenalkyl mit 7 bis 10 C-Atomen, vorzugsweise Alkyl mit 1 bis 5 C-Atomen oder Benzyl, und $X^-$ ein Anion, vorzugsweise ein Halogenidanion oder ein Methosulfatanion, ist,

und $R^5$ für -H, -Cl, -CN, Phenyl, Hydroxy, Acyloxy mit 1 bis 20 C-Atomen im Acylrest, gegebenenfalls substituiertes Amidocarbonyl, wie Alkyl- und Dialkylamidocarbonyl mit 1 bis 6, vorzugsweise 1 bis 4, C-Atomen, oder eine Aminoalkylamidocarbonyl-Gruppe der Formel $-CO-NH-D-NA^1A^2$, worin der Alkylenrest D 1 bis 6, vorzugsweise 1 bis 4, C-Atome hat und $A^1$ und $A^2$ gleich oder verschieden sind und Wasserstoff oder Alkylreste mit je 1 bis 4 C-Atomen bedeuten, gegebenenfalls substituiertes Alkoxycarbonyl mit geradkettigem oder verzweigtem Alkylrest mit 1 bis 8 C-Atomen, Hydroxyalkoxycarbonyl mit bis zu 6 C-Atomen im Hydroxyalkylrest, eine Gruppe der Formel -CO-O-[POA], worin [POA] für einen einseitig veresterten Di- oder Triglykolrest oder

eine Polyoxyalkylenkette mit einer Molmasse von bis zu 10000 steht, eine gegebenenfalls N-mono- oder N,N'-di-alkysubstituierte Aminoalkyloxycarbonyl-Gruppe der Formel $-CO-O-D-NA^1A^2$, worin der Alkylenrest -D- 1 bis 6, vorzugsweise 1 bis 4, C-Atome hat und $A^1$ und $A^2$ gleich oder verschieden sind und Wasserstoff oder Alkylreste mit je 1 bis 4 C-Atome bedeuten,
und $R^{14}$ und $R^{15}$ gleich oder verschieden sind und Wasserstoff oder Alkyl mit 1 bis 6 C-Atomen bedeuten, wobei $R^{14}$ und $R^{15}$ zusammen vorzugsweise 0 bis 6 C-Atome haben, steht.

**3.** Verwendung gemäß Anspruch 1, dadurch gekennzeichnet, daß als Polyaminoverbindung Polyamine der Formel II

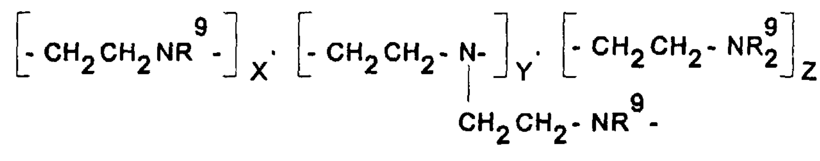

(II)

eingesetzt werden,

worin X, Y und Z ganze Zahlen sind, deren Summe X+Y+Z im Bereich von 10 bis 1000, vorzugsweise von 15 bis 150, insbesondere von 25 bis 125, liegt,
wobei die Verteilung der Comonomer-Baugruppen vorzugsweise statistisch, gegebenenfalls aber auch blockförmig, ist,
0 bis 90 % der Reste $R^9$ Wasserstoff,
10 bis 100 % der Reste $R^9$ lineares oder verzweigtes Alkyl mit 1 bis 20 C-Atomen, Cycloalkyl mit 4 bis 8 C-Atomen oder Polyetherketten der Formel $-(CHR^6-CHR^7-O)_m-H$ bedeuten,
worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann,
und 0 bis 90 % der Reste $R^9$ Alkanoyl mit linearer oder - sofern die Kette mehr als 2 C-Atome aufweist - verzweigter Alkylkette mit 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen, Alkyloxycarbonyl mit 1 bis 20 C-Atomen bedeuten,
oder, sofern zwei Reste $R^9$ an ein und dasselbe Stickstoffatom gebunden sind, beide gemeinsam einen zweiwertigen, linearen gesättigten oder ungesättigten Rest mit 4 oder 5 C-Atomen, oder 3 oder 4 C-Atomen und einem Heteroatom, bilden, der mit dem N-Atom, an das er gebunden ist, einen 5- oder 6-gliedrigen heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann, die Stickstoffatome - soweit sie keine Substituenten $R^9$ tragen, die eine dem Stickstoffatom benachbarte Carbonylfunktion aufweisen - auch zu

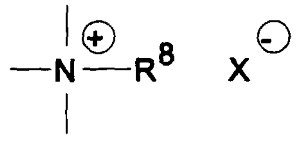

quaternisiert sein können, wobei $R^8$ Alkyl mit 1 bis 10 C-atomen oder Phenalkyl mit 7 bis 10 C-Atomen, vorzugsweise Alkyl mit 1 bis 5 C-Atomen oder Benzyl, und $X^-$ ein Anion, vorzugsweise ein Halogenidanion oder ein Methosulfatanion, ist.

**4.** Verwendung gemäß Anspruch 1, dadurch gekennzeichnet, daß als Polyaminoverbindung Polyamine der Formel III

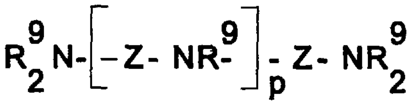

(III)

eingesetzt werden,

worin p für 0 bis 20, vorzugsweise für 1 bis 6, insbesondere für 1 bis 3 steht, und das zweiwertige Bauelement -Z- die Struktur der Formel IV

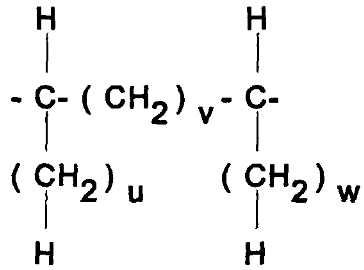

(IV)

hat, worin die Buchstaben u, v und w Zahlen von 0 bis 10, vorzugsweise von 1 bis 4 bedeuten und die Summe u+v+w 1 bis 10, vorzugsweise 1 bis 6 beträgt, wobei die Werte u, v und w in den einzelnen Kettengliedern gleich oder verschieden sein können, wobei die Verteilung der Blöcke vorzugsweise statistisch ist,
0 bis 90 % der Reste $R^9$ Wasserstoff,
10 bis 100 % der Reste $R^9$ lineares oder verzweigtes Alkyl mit 1 bis 20 C-Atomen, Cycloalkyl mit 4 bis 8 C-Atomen oder Polyetherketten der Formel $-(CHR^6-CHR^7-O)_m-H$ bedeuten,
worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann,
und 0 bis 90 % der Reste $R^9$ Alkanoyl mit linearer oder - sofern die Kette mehr als 2 C-Atome aufweist - verzweigter Alkylkette und 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen, Alkyloxycarbonyl mit 1 bis 20 C-Atomen bedeuten,
oder, sofern zwei Reste $R^9$ an ein und dasselbe Stickstoffatom gebunden sind, beide gemeinsam einen zweiwertigen, linearen gesättigten oder ungesättigten Rest mit 4 oder 5 C-Atomen oder 3 oder 4 C-Atomen und einem Heteroatom bilden, der mit dem N-Atom, an das er gebunden ist, einen 5- oder 6-gliedrigen carbocyclischen oder heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann,
die Stickstoffatome - soweit sie keine Substituenten $R^9$ tragen, die eine dem Stickstoffatom benachbarte Carbonylfunktion aufweisen - auch zu

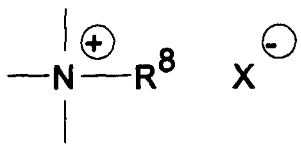

quaternisiert sein können, wobei $R^8$ Alkyl mit 1 bis 10 C-atomen oder Phenalkyl mit 7 bis 10 C-Atomen, vorzugsweise Alkyl mit 1 bis 5 C-Atomen oder Benzyl und $X^-$ ein Anion, vorzugsweise ein Halogenidanion oder ein Methosulfatanion ist, als Hydrophobierungswirkstoff.

**5.** Verwendung gemäß Anspruch 1, dadurch gekennzeichnet, daß N,N'-Bis(aminoalkyl)piperazin-derivaten der Formel V

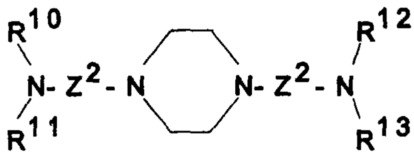

(V)

eingesetzt werden,

worin die zweiwertigen Bauelemente $-Z^2-$ für gleiche oder verschiedene Gruppen der Formel IV

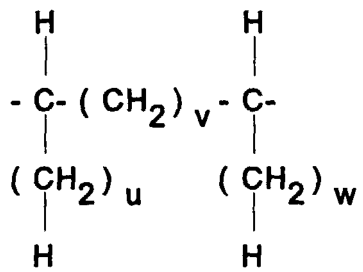

(IV)

stehen, worin die Buchstaben u, v und w Zahlen von 0 bis 10, vorzugsweise von 1 bis 4 bedeuten und die Summe u+v+w 1 bis 10, vorzugsweise 1 bis 6 beträgt,
0 bis 90 % der Reste $R^{10}$ bis $R^{13}$ Wasserstoff,
10 bis 100 % der Reste $R^{10}$ bis $R^{13}$ lineares oder verzweigtes Alkyl mit 1 bis 20 C-Atomen, Cycloalkyl mit 4 bis 8 C-Atomen oder Polyetherketten der Formel $-(CHR^6-CHR^7-O)_m-H$ bedeuten,
worin $R^6$ und $R^7$ gleich oder verschieden sind und für Wasserstoff oder Alkyl mit 1 bis 20 C-Atomen stehen, wobei die Gesamt-Kohlenstoffatomanzahl von $R^6$ und $R^7$ 1 bis 20 beträgt und m eine Zahl von 1 bis 15, vorzugsweise 1 bis 5, bedeutet, wobei innerhalb der Polyetherketten die Bedeutung von $R^6$ und $R^7$ wechseln kann,
oder $R^{11}$ und $R^{13}$ Alkanoyl mit linearer oder - sofern die Kette mehr als 2 C-Atome aufweist - verzweigter Alkylkette und 1 bis 20 C-Atomen, Cycloalkanoyl mit 5 bis 10 C-Atomen, Aralkanoyl mit 7 bis 15 C-Atomen, Aroyl mit 6 bis 12 C-Atomen, Mono- oder Dialkylaminocarbonyl mit insgesamt 1 bis 20 C-Atomen, Alkyloxycarbonyl mit 1 bis 20 C-Atomen bedeuten oder $R^{10}$ mit $R^{11}$ oder $R^{12}$ mit $R^{13}$ gemeinsam einen zweiwertigen, linearen gesättigten oder ungesättigten Rest mit 4 oder 5 C-Atomen oder 3 oder 4 C-Atomen und einem Heteroatom bilden, der mit dem N-Atom, an das er gebunden ist, einen 5- oder 6-gliedrigen carbocyclischen oder heterocyclischen gesättigten oder ungesättigten Ring bildet, der eine oder zwei Carbonylfunktionen enthalten kann und außerdem durch Niederalkyl, Niederalkoxy, Niederalkoxycarbonyl, Hydroxy, Niederalkanoyloxy oder Cyan substituiert oder mit einem Phenylring kondensiert sein kann,

die Aminogruppen $-NR^{10}R^{11}$ und $-NR^{12}R^{13}$, sofern $R^{11}$ bzw. $R^{13}$ keine dem Stickstoffatom benachbarte Carbonylfunktion aufweisen, zu

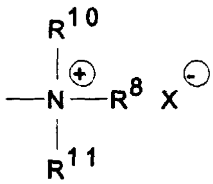

bzw.

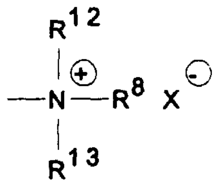

quaternisiert sein kann, wobei $R^8$ Alkyl mit 1 bis 10 C-Atomen oder Phenalkyl mit 7 bis 10 C-Atomen, vorzugsweise Alkyl mit 1 bis 5 C-Atomen oder Benzyl und $X^-$ ein Anion, vorzugsweise ein Halogenidanion oder ein Methosulfatanion ist.

**6.** Verwendung gemäß mindestens einem der Ansprüche 1 bis 5, dadurch gekennzeichnet, daß die Polyaminoverbindungen zur Hydrophobierung von Metall-, Lack- oder Kunststoffoberflächen dienen.

**7.** Verwendung gemäß mindestens einem der Ansprüche 1 bis 5, dadurch gekennzeichnet, daß die Polyaminoverbindungen zur Hydrophobierung von Textilien und Leder dienen.

**8.** Verwendung der Polyaminoverbindungen der Ansprüche 1 bis 5 als Bestandteil von Gleit- und Schmiermitteln, insbesondere von Kettengleit- und schmiermitteln.

**9.** Hydrophobierungszubereitung umfassend Hydrophobierungswirkstoff, Netzmittel, Emulgatoren, bei bevorzugten Zubereitungen auch wassermischbare Lösungsmittel, und starke organische Karbonsäuren, und gegebenenfalls weitere Hilfs- und/oder Zusatzstoffe (wie Schaumbildner und Glanzmittel), dadurch gekennzeichnet, daß sie als Hydrophobierungswirkstoff eine oder eine Kombination mehrerer Polyaminoverbindungen des Anspruchs 1 enthält.

**10.** Verfahren zur Hydrophobierung von harten, nicht saugfähigen Oberflächen durch Spülen der Oberflächen mit einer wäßrigen 0,01 bis 2 gew.-%igen Lösung oder Dispersion bzw. Emulsion eines Hydrophobierungswirkstoffs dadurch gekennzeichnet, daß der Hydrophobierungswirkstoff eine oder eine Kombination mehrerer Polyaminoverbindungen des Anspruchs 1 ist.

**11.** Verfahren zur Hydrophobierung von Textil- und Ledermaterialien durch Imprägnieren der Materialien mit einer wäßrigen 0,1 bis 30 gew.-%igen Lösung oder Dispersion bzw. Emulsion eines Hydrophobierungswirkstoffs dadurch gekennzeichnet, daß der Hydrophobierungswirkstoff eine oder eine Kombination mehrerer Verbindungen des Anspruchs 1 ist.